# EUROPEAN PATENT SPECIFICATION

(11) **EP 3 048 856 B1**
(45) Date of publication and mention of the grant of the patent: **04.07.2018**
(21) Application number: 13897577.6
(22) Date of filing: 15.11.2013
(51) Int. Cl.: H04W 48/12, H04W 48/10, H04W 84/12, H04W 74/08

(54) **STATION ACCESS MANAGEMENT DEVICE AND METHOD FOR WIRELESS LOCAL AREA NETWORK**
STATIONSZUGANGSVERWALTUNGSVORRICHTUNG UND VERFAHREN FÜR WLAN
DISPOSITIF ET PROCÉDÉ DE GESTION D'ACCÈS DE STATIONS POUR RÉSEAU LOCAL SANS FIL

(43) Date of publication of application: 27.07.2016
(73) Proprietor: Huawei Technologies Co., Ltd., Longgang District Shenzhen, Guangdong 518129 (CN)
(72) Inventor: JIANG, Yanping, Shenzhen Guangdong 518129 (CN); YANG, Xun, Shenzhen Guangdong 518129 (CN); ZHEN, Bin, Shenzhen Guangdong 518129 (CN)
(74) Representative: Epping - Hermann - Fischer
(86) International application number: PCT/CN2013/087237
(87) International publication number: WO 2015/070439

(56) References cited:
- WO-A1-2013/089747
- CN-A- 101 483 894
- CN-A- 102 158 985
- CN-A- 103 313 198
- US-A1- 2011 255 401
- KDDI: "Access Control Enhancement", IEEE 11-13/1349r0 , 8 November 2013 (2013-11-08), XP002759828, Retrieved from the Internet: URL:https://mentor.ieee.org/802.11/dcn/13/ 11-13-1349-00-0hew-access-control-enhancem ent.pptx [retrieved on 2016-07-12]

## Description

### Field of the Technology

The present disclosure relates to communication technology, and in particular to a device and method for station access management in wireless local area network.

### Background

Wireless local area network (WLAN for short) technology has been adopted widely. With the rapid development of WLAN technology, legacy devices exist in addition to new protocol stations with a high communication rate, in a current WLAN network. In a case that there are a lots of legacy devices in a WLAN system, many legacy devices communicates by competing for a channel. Therefore, a throughput and communication efficiency of the whole system may be reduced since it takes a long time for the legacy devices to transmit data over an air interface.

Only a method for coexisting between the new protocol stations and the legacy devices is provided according to the conventional technologies (802.11 standards). In the method, during a communication between the new protocol station and an access point, the legacy devices are backed off with a network allocation vector (NAV for short) mechanism. In other words, the legacy device acquires communication time duration information from a packet transmitted by the new protocol station or the access point, updates its NAV, does not participate in a channel competition during the communication between the new protocol station and the access point and may not transmit or receive a packet, thereby not interfering the communication between the new standards protocol station and the access point. Moreover, during a communication between the legacy device and the access point, the new protocol stations may also be backed off with the NAV mechanism.

In the method according to the conventional technologies, it is impossible to control access of the legacy device. Specifically, the backoff of the legacy device may be stopped as soon as the communication of the new protocol station is completed. Then the legacy device may compete for an access channel with the new protocol station fairly once it is detected by the legacy device that the channel is idle. And the legacy device may transmit data once it obtains the access channel resources successfully, i.e. the legacy device and the new protocol station each have a same opportunity to transmit data.

Document, KDDI: "Access Control Enhancement", IEEE 11-13/1349r0, 8 November 2013 (2013-11-08), deals specifically with access control management for HEW stations, wherein, a high rate communication degrades its throughput performance when low rate communication exists in parallel (Slide 3) and suggests that introducing a time limitation for low rate frames will improve aggregated throughput on a BSS.

US20110255401A1 provides a basic service set load management procedure and a quiet interval setup procedure in a WLAN system. The WLAN system uses a bonding channel, and an AP of the WLAN system provides BSS load information regarding a channel having a bandwidth less than or equal to a bandwidth of the bonding channel to STAs of the WLAN system. The BSS load information may be specified by an extended BSS load element. The AP transmits the extended BSS load element to the STA by including the BSS load information to a beacon frame or a probe response frame.

WO2013089747A1 discloses a system and a method for enabling low power devices. Wherein, various embodiments are directed to a wireless access point capable of reserving a wireless communication channel by sending a quiet message to multiple legacy devices. The quiet message may include data identifying periodic quiet durations during which the legacy devices cannot access the wireless communication channel. The wireless access point may send a polling schedule to the multiple how power wireless devices. The polling schedule may include data identifying the periodic quiet durations. The wireless access point may then poll the multiple low power wireless devices during the periodic quiet durations. The low power wireless devices can exchange data with the wireless access point during the quiet durations. The quiet message sent to the legacy devices guarantees that the legacy devices will not use the specified channel during the quiet durations. Thus, communications with the low power wireless devices may occur without interference from the legacy devices.

### Summary

The invention is defined by the appended claims.

Embodiments of the present disclosure provide a device and a method for station access management in wireless local area network as defined in the claims, to improve a throughput and communication efficiency of the WLAN system.

In a first aspect, an access point AP is provided according to the embodiment of the present disclosure. The access point includes:
a processor configured to determine whether a preset condition is met; and
a transmitter configured to broadcast a first message once the preset condition is met, where the first message carries a quiet information element and a first ignoring instruction information element, the quiet information element is used to suspend a station STA, which receives the first message, from transmitting information to the AP, the first ignoring instruction information element is in a format supported only by a specified STA, and the first ignoring instruction information element is used for instructing the specified STA to ignore the quiet information element.

In a first possible implementation according to the first aspect, the first message may be a beacon frame periodically broadcasted by the AP

In a second possible implementation based on the first possible implementation according to the first aspect, the first ignoring instruction information element may include an identifier representing ignoring, or includes an identifier representing ignoring and an identifier representing a protocol version number.

In a third possible implementation based on the first aspect or the first or second possible implementation according to the first aspect, the processor may be configured to:
detect a throughput of a WLAN network in which the AP is located; and
determine that the preset condition is met in a case that the throughput is less than a first threshold value.

In a fourth possible implementation based on the first aspect or the first or second possible implementation according to the first aspect, the processor may be configured to:
detect the quantity of legacy devices associated with the WLAN network in which the AP is located and the quantity of high-efficiency wireless local area network stations HEW STAs associated with the WLAN network in which the AP is located; and
determine that the preset condition is met in a case that the quantity of the legacy devices is greater than a second threshold value or a ratio of the quantity of the legacy devices to the quantity of the HEW STAs is greater than a third threshold value.

In a fifth possible implementation based on the first aspect or the first or second possible implementation according to the first aspect, the preset condition may be a preset time point, and the processor may be configured to determine that the preset condition is met when the preset time point is reached.

In a sixth possible implementation based on the first aspect or any one of the first to fifth possible implementations according to the first aspect, the quiet information element may be a quiet information element quiet IE defined in 802.11 standards; and the specified STA may be an HEW STA, and/or an STA with other new protocol versions later than HEW protocol defined in 802.11 standards.

In a seventh possible implementation based on the first aspect or any one of the first to sixth possible implementations according to the first aspect, the processor may be further configured to determine a quiet duration in the quiet information element based on the throughput of the WLAN network in which the AP is located, the quantity of the associated legacy devices, or the ratio of the quantity of the associated legacy devices to the quantity of the associated HEW STAs.

In a second aspect, a high-efficiency wireless local area network station HEW STA is provided according to the embodiments of the present disclosure. The HEW STA includes:
a receiver configured to receive a first message broadcasted by an access point AP, where the first message carries a quiet information element and a first ignoring instruction information element, the quiet information element is used to suspend a station STA, which receives the first message, from transmitting a signal to the AP, the first ignoring instruction information element is in a format supported only by a specified STA, and the first ignoring instruction information element is used for instructing the specified STA to ignore the quiet information element; and
a processor configured to parse the first message and determine whether to ignore the quiet information element based on an instruction of the first ignoring instruction information element.

In a first possible implementation according to the second aspect, the first message may be a beacon frame periodically broadcasted by the AP.

In a second possible implementation based on the second aspect or the first possible implementation according to the second aspect, the first ignoring instruction information element may include an identifier representing an ignoring; alternatively, the first ignoring instruction information element may include an identifier representing ignoring and an identifier representing a protocol version number.

In a third possible implementation based on the second aspect or the first or second possible implementation according to the second aspect,
the quiet information element may be a quiet information element quiet IE defined in 802.11 standards, and
the specified STA may be an HEW STA and/or an STA with other new protocol versions later than HEW protocol defined in 802.11 standards.

In a third aspect, a method for station access management in wireless local area network WLAN is provided according to the embodiments of the present disclosure. The method includes:
determining, by an access point AP, whether a preset condition is met; and
broadcasting a first message by the AP once the preset condition is met, where the first message carries a quiet information element and a first ignoring instruction information element, the quiet information element is used to suspend a station STA, which receives the first message, from transmitting information to the AP, the first ignoring instruction information element is in a format supported only by a specified STA, and the first ignoring instruction information element is used for instructing the specified STA to ignore the quiet information element.

In a first possible implementation according to the third possible implementation, the first message may be a beacon frame periodically broadcasted by the AP.

In a second possible implementation based on the third aspect or the first possible implementation according to the third aspect, the first ignoring instruction information element may include an identifier representing ignoring, or includes an identifier representing ignoring and an identifier representing a protocol version number.

In a third possible implementation based on the third aspect or the first or second possible implementation, the determining, by the AP, whether the preset condition is met may include:
detecting, by the AP, a throughput of a WLAN network in which the AP is located; and
determining that the preset condition is met in a case that the throughput is less than a first threshold value.

In a fourth possible implementation based on the third aspect or the first or second possible implementation according to the third aspect, the determining, by the AP, whether the preset condition is met may include:
detecting, by the AP, the quantity of legacy devices associated with the WLAN network in which the AP is located and the quantity of high-efficiency wireless local area network HEW STAs associated with the WLAN network in which the AP is located; and
determining that the preset condition is met in a case that the quantity of the legacy devices is greater than a second threshold value or a ratio of the quantity of the legacy devices to the quantity of the HEW STAs is greater than a third threshold value.

In a fifth possible implementation based on the third aspect or the first or second possible implementation according to the third aspect, the preset condition may be a preset time point, and it may be determined by the AP that the preset condition is met when the preset time point is reached.

In a sixth possible implementation based on the third aspect or any one of the first to fifth possible implementations according to the third aspect:
the quiet information element may be a quiet information element quiet IE defined in 802.11 standards; and
the specified STA may be an HEW STA and/or an STA with other new protocol versions later than HEW protocol defined in 802.11 standards.

In a seventh possible implementation based on the third aspect or any one of the first to sixth possible implementations according to the third aspect, the method may further include:
determining, by the AP, a quiet duration in the quiet information element based on the throughput of the WLAN network in which the AP is located, the quantity of the associated legacy devices or the ratio of the quantity of the associated legacy devices to the quantity of the associated HEW STAs.

In a fourth aspect, a method for station access management in wireless local area network WLAN is provided according to the embodiment of the present disclosure. The method includes:
receiving, by a high-efficiency wireless local area network station HEW STA, a first message broadcasted by an access point AP, where the first message carries a quiet information element and a first ignoring instruction information element, the quiet information element is used to suspend a station STA, which receives the first message, from transmitting information to the AP, the first ignoring instruction information element is in a format supported only by a specified STA, and the first ignoring instruction information element is used for instructing the specified STA to ignore the quiet information element; and
parsing the first message and determining whether to ignore the quiet information element based on an instruction of the first ignoring instruction information element, by the HEW STA.

In a first possible implementation according to the fourth aspect, the first message may be a beacon frame periodically broadcasted by the AP.

In a second possible implementation based on the fourth aspect or the first possible implementation according to the fourth aspect, the first ignoring instruction information element may include an identifier representing ignoring, alternatively, the first ignoring instruction information element may include an identifier representing ignoring and an identifier representing a protocol version number.

In a third possible implementation based on the fourth aspect or the first or second possible implementation according to the fourth aspect,
the quiet information element may be a quiet information element quiet IE defined in 802.11 standards, and
the specified STA may be an HEW STA and/or an STA with other new protocol versions later than HEW protocol defined in 802.11 standards.

In a fifth aspect, an access point AP is provided according to the embodiments of the present disclosure. The AP includes:
a processor configured to determine whether a preset condition is met; and
a transmitter configured to broadcast a second message once the preset condition is met, where the second message carries a channel switch announcement information element and a second ignoring instruction information element, the channel switch announcement information element is used to enable a station STA, which receives the second message, to switch to a new channel, the second ignoring instruction information element is in a format supported only by a specified STA, and the second ignoring instruction information element is used for instructing the specified STA to ignore the channel switch announcement information element.

In a first possible implementation according to the fifth aspect, the second message may be any one of: a beacon frame, a channel switch announcement frame and an extended channel switch announcement frame periodically broadcasted by the AP.

In a second possible implementation based on the fifth aspect or the first possible implementation according to the fifth aspect, the second ignoring instruction information element may include an identifier representing ignoring, alternatively, the second ignoring instruction information element may include an identifier representing ignoring and an identifier representing a protocol version number.

In a third possible implementation based on the fifth aspect or the first or second possible implementation according to the fifth aspect, the processor may be configured to:
detect a throughput of a WLAN network in which the AP is located; and
determine that the preset condition is met in a case that the throughput is less than a first threshold value.

In a fourth possible implementation based on the fifth aspect or the first or second possible implementation according to the fifth aspect, the processor may be configured to:
detect the quantity of legacy devices associated with the WLAN network in which the AP is located and the quantity of high-efficiency wireless local area network HEW STAs associated with the WLAN network in which the AP is located; and
determine that the preset condition is met in a case that the quantity of the legacy devices is greater than a second threshold value or a ratio of the quantity of the legacy devices to the quantity of the HEW STAs is greater than a third threshold value.

In a fifth possible implementation based on the fifth aspect or the first or second possible implementation according to the fifth aspect, the preset condition may be a preset time point, and the processor is configured to determine that the preset condition is met when the preset time point is reached.

In a sixth possible implementation based on the fifth aspect or any one of the first to fifth possible implementations according to the fifth aspect,
the channel switch announcement information element may be a channel switch announcement information element channel switch announcement IE or an extended channel switch announcement information element extended channel switch announcement IE defined in 802.11 standards; and
the specified STA may be an HEW STA and/or an STA with other new protocol versions later than HEW protocol defined in 802.11 standards.

In a seventh possible implementation based on the fifth aspect or any one of the first to sixth possible implementations according to the fifth aspect, the processor may be further configured to determine an AP corresponding to the new channel, where a current load of the AP corresponding to the new channel is less than a fourth threshold value, the quantity of legacy devices associated with the AP corresponding to the new channel is less than a fifth threshold value, or a ratio of the quantity of the legacy devices associated with the AP corresponding to the new channel to the quantity of HEW STAs associated with the AP corresponding to the new channel is less than a sixth threshold value.

In a sixth aspect, a high-efficiency wireless local area network station HEW STA is provided according to the embodiments of the present disclosure. The HEW STA includes:
a receiver configured to receive a second message broadcasted by an access point AP, where the second message carries a channel switch announcement information element and a second ignoring instruction information element, the channel switch announcement information element is used to enable a station STA, which receives the second message, to switch to a new channel, the second ignoring instruction information element is in a format supported only by a specified STA, and the second ignoring instruction information element is used for instructing the specified STA to ignore the channel switch announcement information element; and
a processor configured to parse the second message and determine whether to ignore the channel switch announcement information element based on an instruction of the second ignoring instruction information element.

In a first possible implementation according to the sixth aspect, the second message may be any one of: a beacon frame, a channel switch announcement frame and an extended channel switch announcement frame periodically broadcasted by the AP.

In a second possible implementation based on the sixth aspect or the first possible implementation according to the sixth aspect, the second ignoring instruction information element may include an identifier representing ignoring, alternatively, the second ignoring instruction information element may include an identifier representing ignoring and an identifier representing a protocol version number.

In a third possible implementation based on the sixth aspect or the first or second possible implementation according to the sixth aspect,
the channel switch announcement information element may be a channel switch announcement information element channel switch announcement IE or an extended channel switch announcement information element extended channel switch announcement IE defined in 802.11 standards; and
the specified STA may be HEW STA and/or an STA with other new protocol versions later than HEW protocol defined in 802.11 standards.

In a seventh aspect, a method for station access management in wireless local area network WLAN is provided according to the embodiments of the present disclosure. The method includes:
determining, by an access point AP, whether a preset condition is met; and
broadcasting a second message by the AP once the preset condition is met, where the second message carries a channel switch announcement information element and a second ignoring instruction information element, the channel switch announcement information element is used to enable a station STA, which receives the second message, to switch to a new channel, the second ignoring instruction information element is in a format supported only by a specified STA, and the second ignoring instruction information element is used for instructing the specified STA to ignore the channel switch announcement information element.

In a first possible implementation according to the seventh aspect, the second message may be any one of: a beacon frame, a channel switch announcement frame and an extended channel switch announcement frame periodically broadcasted by the AP.

In a second possible implementation based on the seventh aspect or the first possible implementation according to the seventh aspect, the second ignoring instruction information element may include an identifier representing ignoring, alternatively, the second ignoring instruction information element may include an identifier representing ignoring and an identifier representing a protocol version number.

In a third possible implementation based on the seventh aspect or the first or second possible implementation according to the seventh aspect, the determining, by an access point AP, whether a preset condition is met may include:
detecting, by the AP, a throughput of a WLAN network in which the AP is located; and
determining, by the AP, that the preset condition is met in a case that the throughput is less than a first threshold value.

In a fourth possible implementation based on the seventh aspect or the first or second possible implementation according to the seventh aspect, the determining, by the access point AP, whether a preset condition is met may include:
detecting, by the AP, the quantity of legacy devices associated with a WLAN network in which the AP is located and the quantity of high-efficiency wireless local area network HEW STAs associated with the WLAN network in which the AP is located; and
determining, by the AP, that the preset condition is met in a case that the quantity of the legacy devices is greater than a second threshold value or a ratio of the quantity of the legacy devices to the quantity of the HEW STAs is greater than a third threshold value.

In a fifth possible implementation based on the seventh aspect or the first or second possible implementation according to the seventh aspect, the preset condition may be a preset time point, and it is determined by the AP that the preset condition is met when the preset time point is reached.

In a sixth possible implementation based on the seventh aspect or any one of the first to fifth possible implementations according to the seventh aspect,
the channel switch announcement information element may be a channel switch announcement information element channel switch announcement IE or an extended channel switch announcement information element extended channel switch announcement IE defined in 802.11 standards; and
the specified STA may be an HEW STA and/or an STA with other new protocol versions later than HEW protocol defined in 802.11 standards.

In a seventh possible implementation based on the seventh aspect or any one of the first to sixth possible implementations according to the seventh aspect, the method may further include:
determining, by the AP, an AP corresponding to the new channel, where a current load of the AP corresponding to the new channel is less than a fourth threshold value, the quantity of legacy devices associated with the AP corresponding to the new channel is less than a fifth threshold value, or a ratio of the quantity of the legacy devices associated with the AP corresponding to the new channel to the quantity of HEW STAs associated with the AP corresponding to the new channel is less than a sixth threshold value.

In an eighth aspect, a method for station access management in wireless local area network WLAN is provided according to the embodiments of the preset disclosure. The method includes:
receiving, by a high-efficiency wireless local area network station HEW STA, a second message broadcasted by an access point AP, where the second message carries a channel switch announcement information element and a second ignoring instruction information element, the channel switch announcement information element is used to enable a station STA, which receives the second message, to switch to a new channel, the second ignoring instruction information element is in a format supported only by a specified STA, and the second ignoring instruction information element is used for instructing the specified STA to ignore the channel switch announcement information element; and
parsing the second message and determining whether to ignore the channel switch announcement information element based on an instruction of the second ignoring instruction information element, by the HEW STA.

The HEW STA parses the second message and determines whether to ignore the channel switch announcement information element based on an instruction of the second ignoring instruction information element.

In a first possible implementation according to the eighth aspect, the second message may be any one of: a beacon frame, a channel switch announcement frame and an extended channel switch announcement frame periodically broadcasted by the AP.

In a second possible implementation based on the eighth aspect or the first possible implementation according to the eighth aspect, the second ignoring instruction information element may include an identifier representing ignoring, or includes an identifier representing ignoring and an identifier representing a protocol version number.

In a third possible implementation based on the eighth aspect or the first or second possible implementation according to the eighth aspect,
the channel switch announcement information element may be a channel switch announcement information element channel switch announcement IE or an extended channel switch announcement information element extended channel switch announcement IE defined in 802.11 standards; and
the specified STA may be an HEW STA and/or an STA with other new protocol versions later than HEW protocol defined in 802.11 standards.

In the device and method for managing the access of the wireless local area network station according to the embodiments, the first message containing the quiet information element and the first ignoring instruction information element is transmitted by the AP to all STAs in a BSS, in a case that a network state of WLAN meets the preset condition. The quiet information element is in a format supported by both the legacy device and the HEW station, and the first ignoring instruction information element is in a format supported only by the HEW station but not supported by the legacy device. In this case, the legacy device keeps quiet in a specified time duration according to an instruction of the quiet information element, and the HEW station continues to communicate with the AP, thereby controlling the access of the legacy device and improving the throughput and communication efficiency of the WLAN network system.

In the device and method for managing the access of the wireless local area network station according to the embodiments, the second message containing the channel switch announcement information element and the second ignoring instruction information element is transmitted by the AP to all STAs of a BSS, in a case that a network state of WLAN meets the preset condition. The channel switch announcement information element is in a format supported by both the legacy device and the HEW station, and the second ignoring instruction information element is in a format supported only by the HEW station but not supported by the legacy device. In this case, the legacy device switches to the new channel in a specified time duration according to an instruction of the channel switch announcement information element, and the HEW station continues to communicate with the AP, thereby controlling the access of the legacy device and improving the throughput and communication efficiency of the WLAN network system.

### Brief Description of the Drawings

Figure 1 is a schematic structural diagram of an AP according to a first embodiment of the present disclosure;
Figure 2 is a schematic diagram of a format of a quiet information element;
Figure 3 is a schematic format diagram of a first mode of a first ignoring instruction information element;
Figure 4 is a schematic format diagram of a second mode of a first ignoring instruction information element;
Figure 5 is a schematic structural diagram of an HEW STA according to a first embodiment of the present disclosure;
Figure 6 is a flowchart of a method for station access management in WLAN according to a first embodiment of the preset disclosure;
Figure 7 is a flowchart of a method for station access management in WLAN according to a second embodiment of the present disclosure;
Figure 8 is a interaction flowchart of a method for station access management in WLAN according to a third embodiment of the present disclosure;
Figure 9 is a schematic structural diagram of an AP according to a second embodiment of the present disclosure;
Figure 10(a) is a schematic diagram of a format of channel switch announcement IE;
Figure 10 (b) is a schematic diagram of a format of Extended channel switch announcement IE;
Figure 11 is a schematic diagram of HEW STA according to a second embodiment of the present disclosure;
Figure 12 is a flowchart of a method for station access management in WLAN according to a fourth embodiment of the present disclosure;
Figure 13 is a flowchart of a method for station access management in WLAN according to a fifth embodiment of the present disclosure; and
Figure 14 is an interaction flowchart of a method for station access management in WLAN according to a sixth embodiment of the present disclosure.

### Detailed Description of the Embodiments

The technical solution according to the embodiments of the present disclosure will be described clearly and completely as follows in conjunction with the drawings. So that the objectives, technical solutions and advantages of the present disclosure are clearer. It is apparent that the described embodiments are only a few rather than all of the embodiments according to the present disclosure. Any other embodiments obtained by those skilled in the art based on the embodiments in the present disclosure without any creative work fall in the scope of the present disclosure.

A WLAN network described in the embodiments of the present disclosure includes at least one Access Point (AP for short) and multiple Stations (STA for short). The STAs include legacy devices and new protocol-supported Stations. New versions of 802.11 protocols are continuously developed. When a new protocol is developed, the 802.11 standards generally require the new protocol to be backward compatible with old versions of protocols. For example, the 802.11g is required to be backward compatible with the 802.11b, the 802.11n is required to be backward compatible with the 802.11g and the 802.11a, and the 802.11ac is required to be backward compatible with the 802.11n. A high efficiency WLAN (HEW for short) standard group was established in May, 2013, for drawing up new versions of standard protocols. In the embodiments of the present disclosure, a station supporting the HEW protocol is referred to as an HEW STA or an HEW Station, and a Station supporting old versions of protocols (one or more of protocols of 802.11b, 802.11g, 802.11a, 802.11n and 802.11ac) before the HEW protocol is referred to as a legacy station, legacy device or legacy STA.

In a basic wireless local area network architecture, a basic service set (BSS for short) is formed by one AP and several STAs associated with the AP. Stations supporting HEW protocol and legacy devices may coexist in a BSS. However, many low-speed legacy devices exist and it takes more time at an air interface for the low-speed legacy devices to transmitting data, thereby reducing a throughput and a communication efficiency of the whole WLAN system. To address the above issue, the embodiments of the present disclosure provide a method for controlling access of legacy devices, to improve the throughput and communication efficiency of the WLAN system.

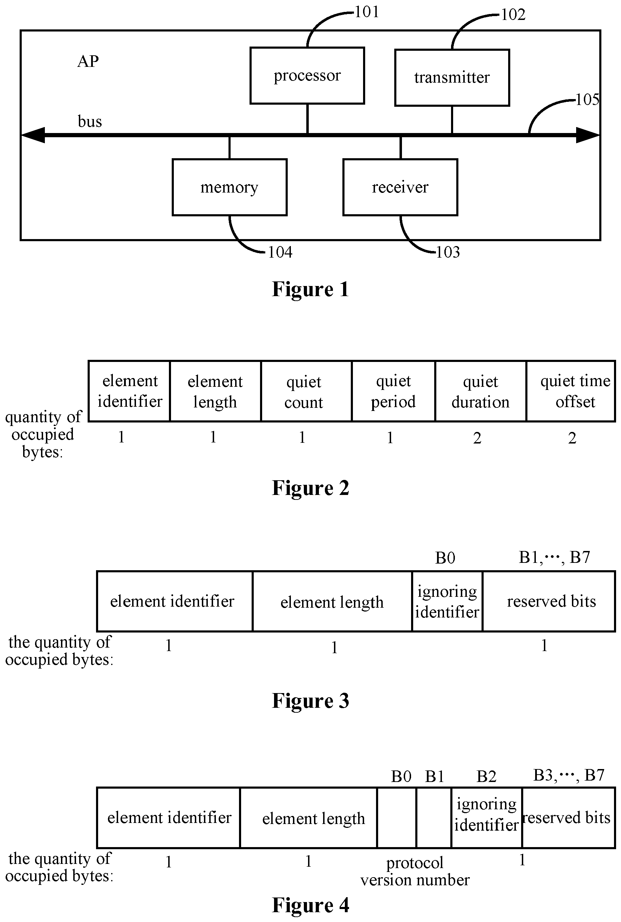

Figure 1 is a schematic structural diagram of an AP according to a first embodiment of the present disclosure. As shown in Figure 1, the AP according to the embodiment may include a processor 101 and a transmitter 102. In addition, a receiver 103, a memory 104 and a bus 105 are shown in the drawing. The processor 101, the transmitter 102, the receiver 103 and the memory 104 are connected and communicate with one another via the bus 105.

The bus 105 may be an industry standards architecture (ISA) bus, a peripheral component interconnect (PCI) bus, an Extended Industry Standards Architecture (EISA) bus, or the like. The bus 105 may be divided into an address bus, a data bus, a control bus, and the like. For convenience of illustration, the bus is shown with only one bold line in Figure 1, but it does not mean that only one bus or only one type of bus is included.

The memory 104 is configured to store executable program codes including computer operation instructions. The memory 104 may contain a high-speed RAM memory and may further include a non-volatile memory, such as at least one magnetic disk memory.

The processor 101 may be a central processing unit (CPU), an application specific integrated circuit (ASIC), or may be configured as one or more integrated circuits implementing the embodiments of the present disclosure.

The processor 101 is configured to determine whether a preset condition is met.

In a specific implementation, optionally, the preset condition may be whether a throughput of a WLAN network in which the AP is located is less than a first threshold, and the processor 101 may be specifically configured to:
detect the throughput of the WLAN network in which the AP is located; and
determine, by the AP, that the WLAN network meets the preset condition if the throughput is less than the first threshold.

Alternatively, in another implementation, the preset condition may be whether the quantity of legacy devices associated with the WLAN network in which the AP is located is greater than a second threshold, or whether a ratio of the quantity of the legacy devices to the quantity of HEW STAs is greater than a third threshold, and the processor 101 may be configured to:
detect, the quantity of legacy devices and the quantity of HEW STAs, which are associated with the WLAN network in which the AP is located; and
determine that the WLAN network meets the preset condition in a case that the quantity of the legacy devices is greater than the second threshold and the ratio of the quantity of the legacy devices to the quantity of the HEW STAs is greater than the third threshold.

In a specific implementation, the second threshold may be set as zero. That is to say, the preset condition is determined to be met once it is detected that a legacy device is associated with the WLAN network in which AP is located.

Alternatively, in another implementation, the preset condition may be a preset time point, and the processor 101 may be configured to determine that the preset condition is met when the preset time point is reached.

In a specific implementation, a time period or other conditions may be further set in advance, and the disclosure is not limited in this aspect.

In this case, the AP may determine whether an associated STA in a current BSS is a legacy device or a HEW station by a probe request frame or by detecting a format of a Physical Layer Convergence Protocol Data Unit (PLCP Protocol Data Unit, PPDU for short) frame, thereby obtaining the quantity of legacy devices and the quantity of HEW STAs, which are associated with the WLAN network in which the AP is located.

The transmitter 102 is configured to broadcast a first message once the preset condition is met. The first message contains a quiet information element and a first ignoring instruction information element. The quiet information element is used to suspend a station STA, which receives the first message, from transmitting information to the AP, and the first ignoring instruction information element, in a format supported only by a specified STA, is used for instructing the specific STA to ignore the quiet information element.

In other words, the first ignoring instruction information element is in a format not supported by the legacy device.

Optionally, the first message may be a beacon frame periodically broadcasted by the AP.

Optionally, the first ignoring instruction information element may include an identifier representing ignoring or may include an identifier representing ignoring and an identifier representing a protocol version number.

Optionally, the specified STA may be an HEW STA and/or an STA with other new protocol versions later than HEW protocol defined in 802.11 standards.

The quiet information element quiet IE defined in the existing 802.11 standards may be adopted for the quiet information element quiet IE. The quiet IE is configured to suspend an STA from transmitting information to the AP for a period of time. Figure 2 is a schematic diagram of a format of a quiet information element. As shown in Figure 2, the quiet information element information unit may include an element identifier Element ID, an element length (Length), a quiet count, a quiet period, a quiet duration and a quiet offset. And meanings of fields of the quiet IE are as follows:
Quiet count: indicates a quiet starting time, with a numeric value representing the quantity of beacon intervals while waiting for the start of the quiet;
Quiet period: a period of quiets (a time interval between adjacent quiets, in units of beacon intervals), with which an STA may enter quiet periodically, and the quiet period represents non-periodicity when being set as zero;
Quiet duration: a quiet duration in units of time units (TUs for short), one TU has 1024 microseconds; and
Quiet offset: for determining, together with the quiet count, an accurate quiet starting time, and labeling a time offset (offset is less than a length of a beacon interval) of the accurate starting time with respect to the quiet count, in units of TUs.

It should be noted that, an AP may determine a quiet duration in a quiet IE based on a state of network and may adjust the quiet duration at any time based on a change of the state. The state of network includes a throughput of a WLAN network, the number of associated legacy devices or a ratio of the number of the associated legacy devices to the number of associated HEW STAs.

The first ignoring instruction information element is in a format supported only by a specific STA. The format may be in two modes. Figure 3 is a schematic diagram showing a format of a first mode of a first ignoring instruction information element, and Figure 4 is a schematic diagram of a second mode of a first ignoring instruction information element. As shown in Figure 3, in the first mode, the first ignoring instruction information element may further include a byte containing an ignoring identifier in addition to the element identifier (Element ID) and the element length (Length). The ignoring identifier occupies the first bit of the byte. For example, it indicates that an HEW STA ignores quiet-related information indicated by the quiet IE in a case that the bit is 1, or it indicates that an HEW STA does not ignore the quiet-related information indicated by a quiet IE in a case that the bit is 0. Other seven bits are reserved, which may be null. As shown in Figure 4, in the second mode, the first ignoring instruction information element may further include a byte containing a protocol version number identifier and an ignoring identifier in addition to the element identifier Element ID and the element length Length. The protocol version number identifier represents that only an STA supporting the protocol version number ignores the quiet information element. The protocol version number identifier may occupy two bits (for example, the protocol version number identifier may be provided in first two bits of the byte), for example, an HEW is identified with 00. The ignoring identifier may occupy one bit (such as the third bit), for example, it indicates to ignore the quiet-related information indicated by the quiet IE if the bit is 1.

It can be seen that, after the AP broadcasts a first message including the quiet information element and the first ignoring instruction information element to all STAs in a BSS, a legacy STA can parse the quiet information element while can not parse the first ignoring instruction information element after receiving the first message. For example, the legacy STA may determine that the first ignoring instruction information element is in a format not supported by the legacy device after viewing the Element ID of the first ignoring instruction information element, and will not continue to parse the instruction element. Therefore, the legacy STA may keep quiet in a specified time period as required by the quiet information element. By contrast, an HEW STA or an STA with a higher protocol version may parse both the quiet information element and the first ignoring instruction information element after receiving the first message. For example, the HEW STA may determine that the first ignoring instruction information element is in a format supported by the HEW STA based on the Element ID of the first ignoring instruction information element. Hence the HEW STA continues parsing the first ignoring instruction information element, thereby learning that the first ignoring instruction information element requires to ignore the quiet information element. Therefore, the HEW STA or the STA with the higher protocol version number may continue communicating with the AP while the legacy device keeps quiet. For a first ignoring instruction information element in the first format, the HEW STA or the STA with the higher protocol version number may ignore the quiet information element as long as it can parse a content of the first ignoring instruction information element. For a first ignoring instruction information element in the second format, the HEW STA or the STA with the higher protocol version number may further determine whether itself supports a protocol version identified by the protocol version number identifier of the first ignoring instruction information element after determining that the information element is in a format supported by the STA, if the STA supports the protocol version, the quiet information element is ignored, and if the STA does not support the protocol version, the STA still keeps quiet in a specified time period as required by the quiet information element.

It should be noted that, the first ignoring instruction information element in the second format further includes the protocol version number identifier for the consideration that new protocol versions may be developed after HEW and the protocol version number is defined for HEW and protocols later than the HEW.

With the AP according to the embodiment, the first message including the quiet information element and the first ignoring instruction information element is transmitted to all STAs in the BSS in a case that a network state of WLAN meets the preset condition. The quiet information element is in a format supported by the legacy device(s) and the HEW station(s), while the first ignoring instruction information element is in a format supported by the HEW station(s) but not supported by the legacy device(s). In this case, the legacy device keeps quiet in a specified time period according to an instruction of the quiet information element, and the HEW station continues communicating with the AP, thereby controlling access of the legacy device and improving a throughput and a communication efficiency of the WLAN network system.

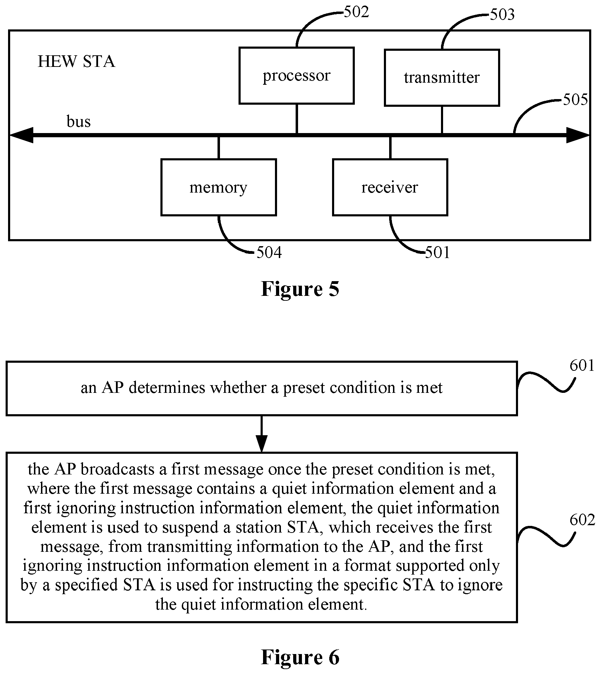

Figure 5 is a schematic structural diagram of an HEW STA according to a first embodiment of the present disclosure. As shown in Figure 5, the HEW STA according to the embodiment may include a receiver 501 and a processor 502. In addition, a transmitter 503, a memory 504 and a bus 505 are shown in the Figure. The receiver 501, the processor 502, the transmitter 503, the memory 504 are connected and communicate with one another via the bus 505.

The bus 505 may be an industry standards architecture (Industry Standards Architecture, ISA) bus, a peripheral component interconnect (Peripheral Component, PCI) bus, an Extended Industry Standards Architecture (Extended Industry Standards Architecture, EISA) bus, or the like. The bus 505 may be divided into an address bus, a data bus, a control bus, and the like. For convenience of illustration, the bus is shown only with one bold line in Figure 5, but it does not mean that only one bus or only one type of bus is included.

The memory 504 is configured to store executable program codes including computer operation instructions. The memory 504 may contain a high-speed RAM memory and may further include a non-volatile memory, such as at least one magnetic disk memory.

The processor 502 may be a central processing unit (CPU), an application specific integrated circuit (ASIC), or may be configured as one or more integrated circuits implementing the embodiments of the present disclosure.

The receiver 501 is configured to receive a first message broadcasted by an access point AP. The first message includes a quiet information element and a first ignoring instruction information element. The quiet information element is used to suspend a station STA, which receives the first message, from transmitting information to the AP. The first ignoring instruction information element is in a format supported only by a specified STA and can not be parsed by a legacy device, and the first ignoring instruction information element is used for instructing the specified STA to ignore the quiet information element; and
the processor 502 is configured to parse the first message and determine whether to ignore the quiet information element based on an instruction of the first ignoring instruction information element.

Optionally, the first message may be a beacon frame periodically broadcasted by the AP.

Optionally, the first ignoring instruction information element may include an identifier representing ignoring or may include an identifier representing ignoring and an identifier representing a protocol version number.

Optionally, the specified STA may be an HEW STA and/or an STA with other new protocol versions later than HEW protocol defined in 802.11 standards.

The quiet information element quiet IE defined in the existing 802.11 standards may be adopted for the quiet information element quiet IE. The quiet IE is configured to suspend an STA from transmitting information to the AP for a period of time. For the specific format of the quiet information element, reference may be made to Figure 2 and the description of quiet information element in the first embodiment of AP, which is not repeated herein.

The first ignoring instruction information element is in the format supported only by the specific STA. The first ignoring instruction information element may be in the either of the two formats shown in Figures 3 and 4, and reference may be made to the description of first ignoring instruction information element in the above first embodiment of AP, which is not repeated herein.

After the processor 502 parses the first ignoring instruction information element, if the first ignoring instruction information element is in the format shown in Figure 3, i.e. not including a protocol version number of the HEW STA, the processor 502 determines whether to ignore the quiet information element based on the ignoring identifier. If the first ignoring instruction information element is in the format shown in Figure 4, i.e. including the protocol version number of HEW STA, the processor 502 firstly determines whether the HEW STA complies with the required protocol version based on the protocol version number identifier, and further determines whether to ignore the quiet information element based on the ignoring identifier if the HEW STA complies with the required protocol version. If the HEW STA does not conform to the required protocol version, the processor determines not to ignore the quiet information element if the HEW STA does not conform to the protocol version.

With the HEW STA according to the embodiment, the first message broadcasted by the AP is received. The first message includes the quiet information element and the first ignoring instruction information element. The quiet information element is in a format supported by the legacy device and the HEW station, and the first ignoring instruction information element is in a format supported by the HEW state but not supported by the legacy device. In this case, the HEW station according to the embodiment continues communicating with the AP while the legacy device keeps quiet in a specified time period according to an instruction of the quiet information element, thereby controlling access of the legacy device and improving a throughput and a communication efficiency of the WLAN network system.

Figure 6 is a flowchart of a method for managing an access of WLAN station according to a first embodiment of the present disclosure. An executive subject of the embodiment is an AP, or a function module for WLAN station access management mounted on the AP. As shown in figure 6, the method according to the embodiment of the present disclosure may include the following steps.

In step 601, AP determines whether a preset condition is met.

In a specific implementation, optionally, the preset condition may be whether a throughput of a WLAN network in which the AP is located is less than a first threshold. And step 601 may further include:
step I, detecting, by the AP, the throughput of the WLAN network in which the AP is located; and
step II, determining, by the AP, that the WLAN network meets the preset condition if the throughput is less than the first threshold.

Alternatively, in another implementation, the preset condition may be whether the number of legacy devices associated with the WLAN network in which the AP is located is greater than a second threshold, or whether a ratio of the number of the legacy devices to the number of HEW STAs is greater than a third threshold. And step 601 may further include:
step I, detecting, by the AP, the number of legacy devices and the number of HEW STAs, which are associated with the WLAN network in which the AP is located; and
step II, determining, by the AP, that the WLAN network meets the preset condition in a case that the number of the legacy devices is greater than the second threshold and the ratio of the number of the legacy devices to the number of the HEW STAs is greater than the third threshold.

In this case, the AP may determine whether an associated STA in the current BSS is a legacy device or a HEW station by a probe request frame or by detecting a format of a PPDU frame, thereby obtaining the number of legacy devices and the number of HEW STAs, which are associated with the WLAN network in which the AP is located.

In an implementation, the second threshold may be set as zero. That is to say, the preset condition is determined to be met once it is detected that a legacy device is associated with the WLAN network in which AP is located.

Alternatively, in another implementation, the preset condition in step 601 may be a preset time point, and the AP performs step 602 at the preset time point. Specifically, a time period may be further set in advance, and step 602 is performed at the period. The preset condition may be other conditions, and the disclosure is not limited in this aspect.

In step 602, the AP broadcasts a first message once the preset condition is met. The first message contains a quiet information element and a first ignoring instruction information element. The quiet information element is used to suspend a station STA, which receives the first message, from transmitting information to the AP, and the first ignoring instruction information element, in a format supported only by a specified STA, is used for instructing the specific STA to ignore the quiet information element.

The first ignoring instruction information element is in a format not supported by the legacy device.

Optionally, the first message may be a beacon frame periodically broadcasted by the AP.

Optionally, the first ignoring instruction information element may include an identifier representing ignoring or may include an identifier representing ignoring and an identifier representing a protocol version number.

Optionally, the specified STA may be an HEW STA and/or an STA with other new protocol versions later than HEW protocol defined in 802.11 standards.

The quiet information element quiet IE defined in the existing 802.11 standards may be adopted for the quiet information element quiet IE. The quiet IE is used to instruct the STA to suspend from transmitting information to the AP for a period of time. For the specific format of the quiet information element, reference may be made to Figure 2 and the description of quiet information element in the above first embodiment of AP, which is not repeated herein.

The first ignoring instruction information element is in a format supported only by a specific STA. The first ignoring instruction information element may be in the either of the two formats shown in Figures 3 and 4, and reference may be made the description of first ignoring instruction information element in the above first embodiment of AP, which is not repeated herein.

Further, before step 602, the method may include: determining, by the AP, a quiet duration in the quiet information element based on a state of the WLAN network in which the AP is located. In other words, quiet durations in quiet information elements transmitted by the AP at different moments may be different. The state of the WLAN network includes a throughput of WLAN network, the number of legacy devices associated with the WLAN network, or a ratio of the number of the legacy devices to the number of HEW STAs, which are associated with the WLAN network.

In the embodiment, the AP transmits the first message including the quiet information element and the first ignoring instruction information element to all STAs in a BSS in a case that the state of the WLAN network meets the preset condition. The quiet information element is in a format supported by the legacy device and the HEW station, and the first ignoring instruction information element is in a format supported by the HEW state but not supported by the legacy device. In this case, the legacy device keeps quiet in a specified time period based on an instruction of the quiet information element, and the HEW station continues communicating with the AP, thereby controlling access of the legacy device and improving a throughput and a communication efficiency of the WLAN network system.

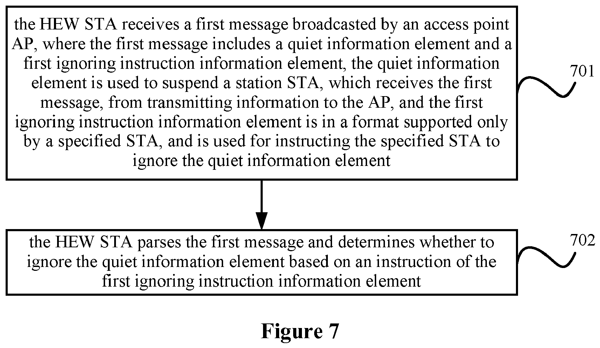

Figure 7 is a flowchart of a method for station access management in WLAN according to a second embodiment of the present disclosure. An executive subject of the embodiment is an HEW STA, or a function module for WLAN station access management, mounted on the HEW STA. As shown in Figure 7, the method according to the embodiment may include the following steps.

In step 701, the HEW STA receives a first message broadcasted by an access point AP. The first message includes a quiet information element and a first ignoring instruction information element. The quiet information element is used to suspend a station STA, which receives the first message, from transmitting information to the AP. The first ignoring instruction information element is in a format supported only by a specified STA, and is used for instructing the specified STA to ignore the quiet information element.

The first ignoring instruction information element is in a format not supported by a legacy device.

In step 702, the HEW STA parses the first message and determines whether to ignore the quiet information element based on an instruction of the first ignoring instruction information element.

Optionally, the first message may be a beacon frame periodically broadcasted by the AP.

Optionally, the first ignoring instruction information element may include an identifier representing ignoring or may include an identifier representing ignoring and an identifier representing a protocol version number.

Optionally, the specified STA may be an HEW STA and/or an STA with other new protocol versions later than HEW protocol defined in 802.11 standards.

The quiet information element quiet IE defined in the existing 802.11 standards may be adopted for the quiet information element quiet IE. The quiet IE is configured to suspend an STA from transmitting information to the AP for a period of time. For the specific format of the quiet information element, reference may be made to Figure 2 and the description of quiet information element in the above first embodiment of AP, which is not repeated herein.

The first ignoring instruction information element is in the format supported only by the specific STA. The specific format of the first ignoring instruction information element may be in the either of the two formats shown in Figures 3 and 4, and reference may be made the description of first ignoring instruction information element in the above first embodiment of AP, which is not repeated herein.

After the HEW STA parses the first ignoring instruction information element, if the first ignoring instruction information element is in the format shown in Figure 3, i.e. not including a protocol version number of the HEW STA, the HEW STA determines whether to ignore the quiet information element based on the ignoring identifier. If the first ignoring instruction information element is in the format shown in Figure 4, i.e. including the protocol version number of the HEW STA, the HEW STA firstly determines whether the HEW STA complies with the required protocol version based on the protocol version number identifier. The HEW STA further determines whether to ignore the quiet information element based on the ignoring identifier if the HEW STA complies with the required protocol version. And the HEW STA determines not to ignore the quiet information element if the HEW STA does not conform to the required protocol version.

According to the embodiment, the HEW STA receives the first message broadcasted by the AP. The first message includes the quiet information element and the first ignoring instruction information element. The quiet information element is in a format supported by the legacy device and the HEW station, and the first ignoring instruction information element is in a format supported by the HEW state but not supported by the legacy device. In this case, the HEW station according to the embodiment continues communicating with the AP while the legacy device keeps quiet in a specified time period in an instruction of the quiet information element, thereby controlling access of the legacy device and improving a throughput and a communication efficiency of the WLAN network system.

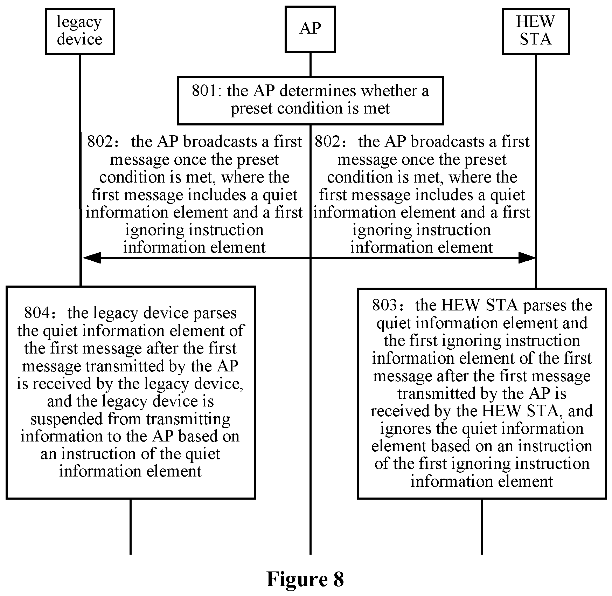

Figure 8 is an interaction flowchart of a method for station access management in WLAN according to a third embodiment of the present disclosure. This embodiment illustrates a process in which an AP, an HEW STA and a legacy device in a WLAN network interact with one another. The WLAN network may include one AP, multiple HEW STAs and multiple legacy devices. Only one HEW STA and one legacy device are shown in Figure 8. As shown in Figure 8, the method according to the embodiment may include the following steps.

In step 801, AP determines whether a preset condition is met.

In step 802, a first message is broadcasted by the AP once the preset condition is met. The first message includes a quiet information element and a first ignoring instruction information element.

The quiet information element is used to suspend a station STA, which receives the first message, from transmitting information to the AP. The first ignoring instruction information element, in a format supported only by a specified STA, is used for instructing the specific STA to ignore the quiet information element. That is to say, the first ignoring instruction information element is in a format not supported by a legacy device.

Optionally, the first message may be a beacon frame periodically broadcasted by the AP.

Optionally, the first ignoring instruction information element may include an identifier representing ignoring or may include an identifier representing ignoring and an identifier representing a protocol version number.

In step 803, the HEW STA parses the quiet information element and the first ignoring instruction information element of the first message after receiving the first message transmitted by the AP, and ignores the quiet information element based on an instruction of the first ignoring instruction information element.

Here, it is assumed that the HEW STA complies with the protocol version as required in the first ignoring instruction information element, or the first ignoring instruction information element does not include the protocol version number.

In step 804, the legacy device parses the quiet information element of the first message after receiving the first message transmitted by the AP, and suspends from transmitting information to the AP based on an instruction of the quiet information element.

Step 803 may be performed before or after step 804.

The HEW STA continues communicating with the AP while the legacy device is suspended from transmitting information to the AP.

In the embodiment, the AP transmits the first message including the quiet information element and the first ignoring instruction information element to all STAs in a BSS in a case that the state of the WLAN network meets the preset condition. The quiet information element is in a format supported by the legacy device and the HEW station, and the first ignoring instruction information element is in a format supported by the HEW state but not supported by the legacy device. In this case, the legacy device keeps quiet in a specified time period based on an instruction of the quiet information element, and the HEW station continues communicating with the AP, thereby controlling access of the legacy device and improving a throughput and a communication efficiency of the WLAN network system.

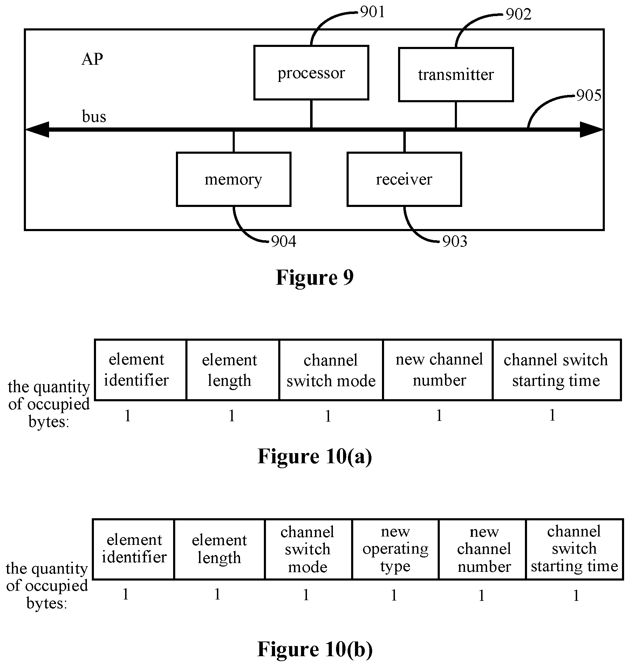

Figure 9 is a schematic structural diagram of an AP according to a second embodiment of the present disclosure. As shown in Figure 9, an AP according to the embodiment may include a processor 901 and a transmitter 902. In addition, a receiver 903, a memory 904 and a bus 905 are shown in the Figure. And the processor 901, the transmitter 902, the receiver 903 and the memory 904 are connected and communicate with one another via the bus 905.

The bus 905 may be an industry standards architecture (Industry Standards Architecture, ISA) bus, a peripheral component interconnect (Peripheral Component, PCI) bus, an Extended Industry Standards Architecture (Extended Industry Standards Architecture, EISA) bus, or the like. And the bus 905 may include an address bus, a data bus, a control bus, and the like. For convenience of illustration, the bus is shown only with one bold line in Figure 1, but it does not mean that only one bus or only one type of bus is included.

The memory 904 is configured to store executable program codes including computer operation instructions. The memory 104 may contain a high-speed RAM memory and may further include a non-volatile memory (non-volatile memory), such as at least one magnetic disk memory.

The processor 901 may be a Central Processing Unit (Central Processing Unit, CPU), an application specific integrated circuit (Application Specific Integrated Circuit, ASIC), or may be configured as one or more integrated circuits implementing the embodiments of the present disclosure.

The processor 901 is configured to determine whether a preset condition is met.

In a specific implementation, optionally, the preset condition may be whether a throughput of a WLAN network in which the AP is located is less than a first threshold, and the processor may be configured to:
detect the throughput of the WLAN network in which the AP is located; and
determine, by the AP, that the WLAN network meets the preset condition if the throughput is less than the first threshold.

Alternatively, in another implementation, the preset condition may be whether the number of legacy devices associated with the WLAN network in which the AP is located is greater than a second threshold, or whether a ratio of the number of the legacy devices to the number of HEW STAs is greater than a third threshold, and the processor may be configured to:
detect the number of legacy devices and the number of HEW STAs, which are associated with the WLAN network in which the AP is located; and
determine that the WLAN network meets the preset condition in a case that the number of the legacy devices is greater than the second threshold and the ratio of the number of the legacy devices to the number of the HEW STAs is greater than the third threshold.

In this case, the AP may determine whether an associated STA in a current BSS is a legacy device or a HEW station by a probe request frame or by detecting a format of a PPDU frame, thereby obtaining the number of legacy devices and the number of HEW STAs, which are associated with the WLAN network in which the AP is located.

In an implementation, the second threshold may be set as zero. That is to say, the preset condition is determined to be met once it is detected that a legacy device is associated with the WLAN network in which AP is located.

Alternatively, in another implementation, the preset condition may be a preset time point, and the processor may be configured to determine that the preset condition is met when the preset time point is reached.

In a specific implementation, a time period or other conditions may be further set in advance, and the disclosure is not limited in this aspect.

The transmitter 902 is configured to broadcast a second message once the preset condition is met. The second message contains a channel switch announcement information element and a second ignoring instruction information element. The channel switch announcement information element is used to enable a station STA, which receives the second message, to switch to a new channel, and the second ignoring instruction information element, in a format supported only by a specified STA, is used for instructing the specific STA to ignore the channel switch announcement information element.

In other words, the second ignoring instruction information element is in a format not supported by the legacy device.

Optionally, the second message may be any one of a beacon frame, a channel switch announcement frame and an extended channel switch announcement frame periodically broadcasted by the AP.

Optionally, the second ignoring instruction information element may include an identifier representing ignoring or may include an identifier representing ignoring and an identifier representing a protocol version number.

The AP may select an AP appropriate for being associated with the legacy device (such as an adjacent AP with a small current load, or an adjacent AP being associated with less legacy devices or having a low ratio of the number of legacy devices to the number of HEW STAs) based on the load of the adjacent AP, and instruct the legacy device to switch to a channel on which the adjacent AP operates.

In other words, the processor 901 is further configured to determine an AP corresponding to the new channel. The AP corresponding to the new channel has a load less than a fourth threshold, the number of legacy devices associated with the AP corresponding to the new channel is less than a fifth threshold, or a ratio of the number of the legacy devices to the number of the HEW STAs, which are associated with the AP corresponding to the new channel is less than a sixth threshold.

Optionally, the specified STA may be an HEW STA and/or an STA with other new protocol versions later than HEW protocol defined in 802.11 standards.

The channel switch announcement information element may be in a format supported by the legacy device. For example, the channel switch announcement information element is a channel switch announcement information element channel switch announcement IE or an extended channel switch announcement information element extended channel switch announcement IE which is defined in 802.11 standards. The IE is used for instructing an STA in a BSS to switch to a certain new channel after some time. Figure 10(a) is a schematic structural diagram of a channel switch announcement IE. As shown in Figure 10(a), the channel switch announcement IE includes an element identifier (Element ID), an element length (Length), a channel switch mode, a new channel number and a channel switch starting time Channel Switch Count. Figure (b) is a schematic structural diagram of an extended channel switch announcement IE. As shown in Figure 10(b), the Extended channel switch announcement IE includes an element identifier (Element ID), an element length (Length), a channel switch mode, a new operating class, a new channel number and a channel switch starting time (Channel Switch Count).

The second ignoring instruction information element is in a format supported by a specified STA but not supported by the legacy device. The format of the second ignoring instruction information element may be the same as that of the first ignoring instruction information element, in other words, in the two modes shown in Figures 3 and 4. It should be noted that, the first and second ignoring instruction information elements may have the same format but with different values for the element IDs, and hence have different functions. As shown in Figure 3, in the first mode, the second ignoring instruction information element may include a byte containing an ignoring identifier in addition to the element identifier Element ID and the element length Length. The ignoring identifier occupies one bit of the byte. For example, it indicates that an HEW STA ignores channel switch information indicated by the channel switch announcement IE or Extended channel switch announcement IE in a case that the bit is 1, or it indicates that an HEW STA does not ignore channel switch information indicated by the channel switch announcement IE or Extended channel switch announcement IE in a case that the bit is 0. Other seven bits are reserved which may be null. As shown in Figure 4, in the second mode, the second ignoring instruction information element may further include a byte containing a protocol version number identifier and an ignoring identifier in addition to the element identifier (Element ID) and the element length (Length). The protocol version number identifier represents that only an STA supporting the protocol version number ignores the channel switch announcement information element. The protocol version number identifier may occupy two bits (for example, the protocol version number identifier may be provided in first two bits of the byte). For example, an HEW is identified with 00. The ignoring identifier may occupy one bit (such as the third bit). For example, it indicates to ignore the channel switch information indicated by the channel switch announcement IE or Extended channel switch announcement IE if the bit is 1.

It can be seen that, after the AP broadcasts a second message including the channel switch announcement information element and the second ignoring instruction information element to all STAs in a BSS, a legacy STA can parse the channel switch announcement information element while can not parse the second ignoring instruction information element after receiving the second message. For example, the legacy STA may determine that the second ignoring instruction information element is in a format not supported by the legacy device after viewing the Element ID of the second ignoring instruction information element, and will not continue to parse the instruction element. Therefore, the legacy STA may switch to the new channel in a specified time period as required by the channel switch announcement information element. An HEW STA or an STA with a higher protocol version number may parse the channel switch announcement information element and the second ignoring instruction information element after receiving the second message. For example, the HEW STA may determine that the second ignoring instruction information element is in a format supported by the HEW STA based on the Element ID of the second ignoring instruction information element. Hence the HEW STA continues parsing the second ignoring instruction information element, thereby learning that the second ignoring instruction information element requires to ignore the channel switch announcement information element. Therefore, the HEW STA or the STA with the higher protocol version number may continue communicating with the AP. For a second ignoring instruction information element in the first format, the HEW STA or the STA with the higher protocol version number may ignore the channel switch announcement information element as long as it can parse a content of the second ignoring instruction information element. For a second ignoring instruction information element in the second format, the HEW STA or the STA with the higher protocol version number may further determine whether itself supports a protocol version corresponding to a protocol version number identifier of the second ignoring instruction information element after determining that the second ignoring instruction information element is in a format supported by the STA. If the STA supports the protocol version, the channel switch announcement information element is ignored. Or, if the STA does not support the protocol version, the STA switches to the new channel in a specified time period as required by the channel switch announcement information element.

It should be noted that, the second ignoring instruction information element in the second format further includes the protocol version number identifier for the consideration that new protocol versions may be developed after HEW and the protocol version number is defined for HEW and protocols later than the HEW.

With the AP according to the embodiment, the second message including the channel switch announcement information element and the second ignoring instruction information element is transmitted to all STAs in the BSS in a case that a network state of WLAN meets the preset condition. The channel switch announcement information element is in a format supported by the legacy device and the HEW station, while the second ignoring instruction information element is in a format supported by the HEW station but not supported by the legacy device. In this case, the legacy device switches to the new channel in a specified time period based on an instruction of the channel switch announcement information element, while the HEW station continues communicating with the AP on an original channel, thereby controlling access of the legacy device and improving a throughput and a communication efficiency of the WLAN network system.

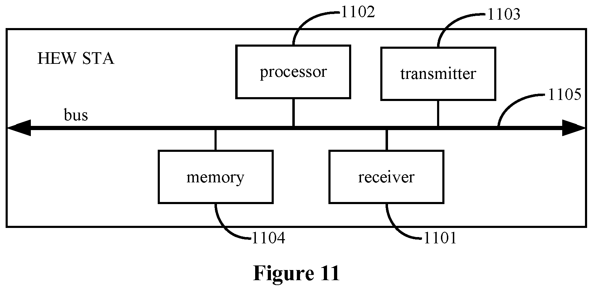

Figure 11 is a schematic structural diagram of an HEW STA according to a second embodiment of the present disclosure. As shown in Figure 11, the HEW STA according to the embodiment may include a receiver 1101 and a processor 1102. In addition, a transmitter 1103, a memory 1104 and a bus 1105 are shown in the Figure. The receiver 1101, the processor 1102, the transmitter 1103, the memory 1104 are connected and communicate with one another via the bus 1105.

The bus 1105 may be an industry standards architecture (ISA) bus, a peripheral component interconnect (PCI) bus, an Extended Industry Standards Architecture (EISA) bus, or the like. And the bus 1105 may include an address bus, a data bus, a control bus, and the like. For convenience of illustration, the bus is shown only with one bold line in Figure 11, but it does not mean that only one bus or only one type of bus is included.

The memory 1104 is configured to store executable program codes including computer operation instructions. The memory 1104 may contain a high-speed RAM memory and may further include a non-volatile memory, such as at least one magnetic disk memory.

The processor 1102 may be a central processing unit (CPU), an application specific integrated circuit (ASIC), or may be configured as one or more integrated circuits implementing the embodiments of the present disclosure.

The receiver 1101 is configured to receive a second message broadcasted by an access point AP. The second message includes a channel switch announcement information element and a second ignoring instruction information element. The channel switch announcement information element is used for enabling a station STA, which receives the second message, to switch to a new channel. The second ignoring instruction information element is in a format supported only by a specified STA, and the second ignoring instruction information element is used for instructing the a high efficiency wireless local area network station HEW STA to ignore the channel switch announcement information element.

In other words, the second ignoring instruction information element is in a format not supported by the legacy device.

The processor 1102 is configured to parse the second message and determine whether to ignore the channel switch announcement information element based on an instruction of the second ignoring instruction information element.

Optionally, the second message may be any one of a beacon frame, a channel switch announcement frame and an extended channel switch announcement frame periodically broadcasted by the AP.

Optionally, the second ignoring instruction information element may include an identifier representing ignoring or may include an identifier representing ignoring and an identifier representing a protocol version number.

The channel switch announcement information element may be in a format supported by the legacy device. For example, the channel switch announcement information element is a channel switch announcement information element (IE) or an extended channel switch announcement IE, defined in 802.11 standards. The IE is used for instructing an STAto switch to a new channel in a certain time period. For the specific format of the channel switch announcement information element, reference may be made to Figure 10(a) or Figure 10(b) and the description of the channel switch announcement information element in the above second embodiment of AP, which is not repeated herein.

The second ignoring instruction information element is in a format supported only by a specified STA. The format of the second ignoring instruction information element may be the same as that of the first ignoring instruction information element, in other words, the second ignoring instruction information element may be in the format shown in Figure 3 or 4, which is not repeated herein. It should be noted that, the first and second ignoring instruction information elements may have the same format while have different values of the element IDs, and therefore have different functions.

Optionally, the specified STA may be an HEW STA and/or an STA with other new protocol versions later than HEW protocol defined in 802.11 standards.

After the processor 1102 parses the second ignoring instruction information element, if the second ignoring instruction information element is in the format shown in Figure 3, i.e. not including a protocol version number of the HEW STA, the processor 1102 determines whether to ignore the channel switch announcement information element based on the ignoring identifier. If the second ignoring instruction information element is in the format shown in Figure 4, i.e. including the protocol version number of HEW STA, the processor 1102 firstly determines whether the HEW STA complies with the required protocol version based on the protocol version number identifier. The processor further determines whether to ignore the channel switch announcement information element based on the ignoring identifier if the HEW STA complies with the protocol version. Or, the processor determines not to ignore the channel switch announcement information element if the HEW STA does not conform to the protocol version.

With the HEW STA according to the embodiment, the second message broadcasted by the AP is received. The second message includes the channel switch announcement information element and the second ignoring instruction information element. The channel switch announcement information element is in a format supported by the legacy device and the HEW station, while the second ignoring instruction information element is in a format supported by the HEW state but not supported by the legacy device. In this case, the legacy device switches to the new channel in a specified time period based on an instruction of the channel switch announcement information element while the HEW station continues communicating with the AP on an original channel, thereby controlling access of the legacy device and improving a throughput and a communication efficiency of the WLAN network system.

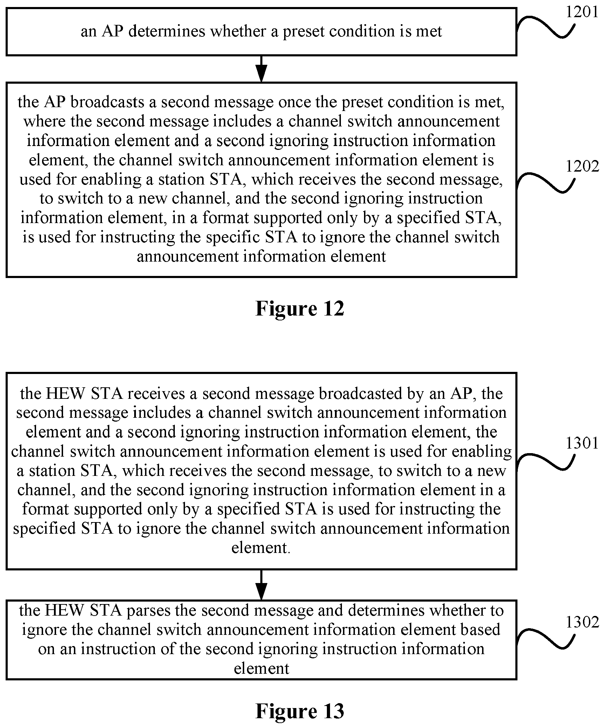

Figure 12 is a flowchart of a method for station access management in WLAN according to a fourth embodiment of the present disclosure. An executive subject according to the embodiment is an AP, or may be a function module for WLAN station access management, mounted on the AP. As shown in Figure 12, the method according to the embodiment may include the following steps.

In step 1201, AP determines whether a preset condition is met.

In a specific implementation, optionally, the preset condition may be whether a throughput of a WLAN network in which the AP is located is less than a first threshold. And step 1201 may include:
step I, detecting, by the AP, the throughput of the WLAN network in which the AP is located; and
step II, determining, by the AP, that the WLAN network meets the preset condition if the throughput is less than the first threshold.

Alternatively, in another implementation, the preset condition may be whether the number of legacy devices associated with the WLAN network in which the AP is located is greater than a second threshold, or whether a ratio of the number of the legacy devices to the number of HEW STAs is greater than a third threshold. And step 1201 may include:
step I, detecting, by the AP, the number of legacy devices and the number of HEW STAs, which are associated with the WLAN network in which the AP is located; and
step II, determining, by the AP, that the WLAN network meets the preset condition in a case that the number of the legacy devices is greater than the second threshold or the ratio of the number of the legacy devices to the number of the HEW STAs is greater than the third threshold.

In this case, the AP may determine whether an associated STA in the current BSS is a legacy device or a HEW station by a probe request frame or by detecting a format of PPDU frame, thereby obtaining the number of legacy devices and the number of HEW STAs, which are associated with the WLAN network in which the AP is located.

In an implementation, the second threshold may be set as zero. That is to say, the preset condition is determined to be met once it is detected that a legacy device is associated with the WLAN network in which AP is located.

Alternatively, in another implementation, the preset condition may be a preset time point, and the AP performs step 1202 at the preset time point. Specifically, a time period may be further set in advance, and step 1202 is performed at the period. The preset condition may be other conditions, and the disclosure is not limited in this aspect.

In step 1202, the AP broadcasts a second message once the preset condition is met. The second message includes a channel switch announcement information element and a second ignoring instruction information element. The channel switch announcement information element is used for enabling a station STA, which receives the second message, to switch to a new channel, and the second ignoring instruction information element, in a format supported only by a specified STA, is used for instructing the specific STA to ignore the channel switch announcement information element.

The second ignoring instruction information element is in a format not supported by the legacy device.

Optionally, the second message may be any one of a beacon frame, a channel switch announcement frame and an extended channel switch announcement frame periodically broadcasted by the AP.

Optionally, the second ignoring instruction information element may include an identifier representing ignoring or may include an identifier representing ignoring and an identifier representing a protocol version number.

Optionally, the specified STA may be an HEW STA and/or an STA with other new protocol versions later than HEW protocol defined in 802.11 standards.

The channel switch announcement information element may be an IE defined in the existing 802.11 standards. For example, the channel switch announcement information element is a channel switch announcement information element or an extended channel switch announcement information element, which is defined in 802.11 standards. The IE is used for instructing an STA to switch to a certain new channel in a certain time period. For the specific format of the channel switch announcement information element, reference may be made to Figure 10 (a) or 10 (b), and the description of channel switch announcement information element according to the above second embodiment of AP, which is not repeated herein.

The second ignoring instruction information element is in a format supported only by a specified STA. The format of the second ignoring instruction information element may be the same as that of the first ignoring instruction information element, in other words, the second ignoring instruction information element may be in the format shown in Figure 3 or 4, for which reference may be made to the description of the second ignoring instruction information element according to the second embodiment of the present disclosure of AP which is not repeated herein.

Further, the method may further include determining an AP corresponding to the new channel. where a current load of the AP corresponding to the new channel is less than a fourth threshold, the number of legacy devices associated with the AP is less than a fifth threshold, or a ratio of the number of the legacy devices to the number of HEW STAs is less than a sixth threshold.

Before step 1202 is performed, the AP may select an appropriate AP (such as an adjacent AP with a small current load, an adjacent AP being associated with less legacy devices, or an adjacent AP with a small ratio of the number of legacy devices associated with the adjacent AP to the number of HEW STAs associated with the adjacent AP), and instruct the legacy device to switch to a channel on which the adjacent AP operates.

According to the embodiment, the AP transmits the second message including the channel switch announcement information element and the second ignoring instruction information element all STAs of the BSS in a case that a network state of WLAN meets the preset condition. The channel switch announcement information element is in a format supported by the legacy device and the HEW station, while the second ignoring instruction information element is in a format supported by the HEW station but not supported by the legacy device. In this case, the legacy device is switched the new channel in a specified time period based on an instruction of the channel switch announcement information element, while the HEW station continues communicating with the AP, thereby controlling an access of the legacy device and improving a throughput and a communication efficiency of the WLAN network system.

Figure 13 is a flowchart of a method for station access management in WLAN according to an embodiment of the present disclosure. An executive subject according to the embodiment is an HEW STA, or a function module, for WLAN station access management, mounted on the HEW STA. As shown in Figure 13, the method according to the embodiment may include steps 1301 to 1302.

In step 1301, the HEW STA receives a second message broadcasted by an AP. The second message includes a channel switch announcement information element and a second ignoring instruction information element. The channel switch announcement information element is used for enabling a station STA, which receives the second message, to switch to a new channel. The second ignoring instruction information element in a format supported only by a specified STA is used for instructing the specified STA to ignore the channel switch announcement information element.

The second ignoring instruction information element is in a format not supported by a legacy device.

In step 1302, the HEW STA parses the second message and determines whether to ignore the channel switch announcement information element based on an instruction of the second ignoring instruction information element.

Optionally, the second message may be any one of a beacon frame, a channel switch announcement frame and an extended channel switch announcement frame periodically broadcasted by the AP.

Optionally, the second ignoring instruction information element may include an identifier representing ignoring or may include an identifier representing ignoring and an identifier representing a protocol version number.

Optionally, the specified STA may be an HEW STA and/or an STA with other new protocol versions later than HEW protocol defined in 802.11 standards.

The channel switch announcement information element may be an IE defined in the existing 802.11 standards. For example, the channel switch announcement information element is a channel switch announcement information element channel switch announcement IE or an extended channel switch announcement information element extended channel switch announcement IE, which is defined in 802.11 standards. The IE is used for instructing an STA to switch to a certain new channel in a certain time period. For the specific format of the channel switch announcement information element, reference may be made to Figure 10 (a) or 10 (b), and the description of channel switch announcement information element according to the above second embodiment of AP, which is not repeated herein.

The second ignoring instruction information element is in a format supported only by a specified STA. The format of the second ignoring instruction information element may be the same as that of the first ignoring instruction information element, in other words, the second ignoring instruction information element may be in the format shown in Figure 3 or 4, for which reference may be made to the description of the second ignoring instruction information element according to the second embodiment of the present disclosure of AP which is not repeated herein.

After the HEW STA parses the second ignoring instruction information element, if the second ignoring instruction information element is in the format shown in Figure 3, i.e. not including a protocol version number of the HEW STA, the HEW STA determines whether to ignore the channel switch announcement information element based on the ignoring identifier. If the second ignoring instruction information element is in the format shown in Figure 4, i.e. including the protocol version number of HEW STA, the HEW STA firstly determines whether the HEW STA complies with the required protocol version based on the protocol version number identifier. The HEW STA determines whether to ignore the channel switch announcement information element based on the ignoring identifier if the HEW STA complies with the protocol version. Or, the HEW STA determines not to ignore the channel switch announcement information element if the HEW STA does not conform to the protocol version.

According to the embodiment, the HEW STA receives the second message broadcasted by the AP. The second message includes the channel switch announcement information element and the second ignoring instruction information element. The channel switch announcement information element is in a format supported by the legacy device and the HEW station, while the second ignoring instruction information element is in a format supported by the HEW state but not supported by the legacy device. In this case, the legacy device switches to the new channel in a specified time period based on an instruction of the channel switch announcement information element while the HEW station continues communicating with the AP on an original channel, thereby controlling access of the legacy device and improving a throughput and a communication efficiency of the WLAN network system.

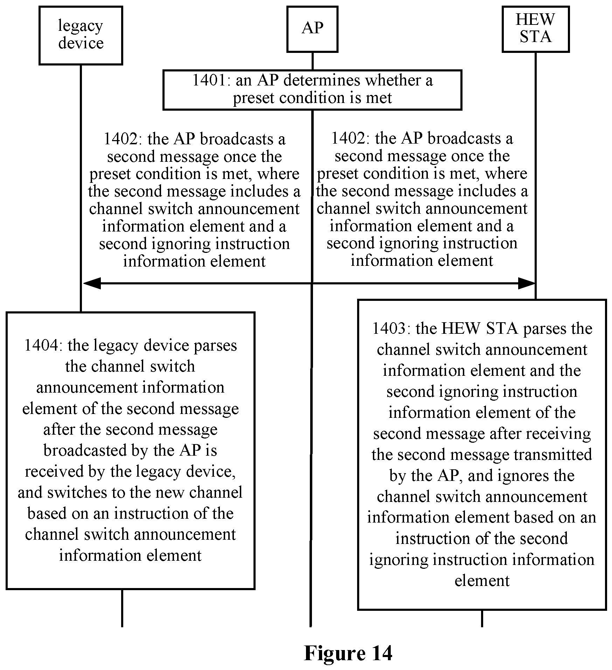

Figure 14 is an interaction flowchart of a method for station access management in WLAN according to an embodiment of the present disclosure. The embodiment embodies a process in which an AP, an HEW STA and a legacy device of a WLAN network interact with one another. The WLAN network may include one AP, multiple HEW STAs and multiple legacy devices. As shown in Figure 14, the method according to the embodiment may include the following steps.

In step 1401, AP determines whether a preset condition is met.

In step 1402, a second message is broadcasted by the AP once the preset condition is met. The second message includes a channel switch announcement information element and a second ignoring instruction information element.

The channel switch announcement information element is used for enabling a station STA, which receives the second message, to switch to a new channel, and the second ignoring instruction information element in a format supported only by a specified STA is used for instructing a high efficiency wireless local area network station HEW STA to ignore the channel switch announcement information element.

Optionally, the specific STA may be an HEW STA and/or an STA with other new protocol versions later than the HEW protocol defined in 802.11 standards.

In other words, the second ignoring instruction information element is in a format not supported by a legacy device.

Optionally, the second message may be any one of a beacon frame, a channel switch announcement frame and an extended channel switch announcement frame periodically broadcasted by the AP.

Optionally, the second ignoring instruction information element may include an identifier representing ignoring or may include an identifier representing ignoring and an identifier representing a protocol version number.

The AP may select an AP appropriate for being associated with the legacy device (such as an adjacent AP with a small current load, an adjacent AP being associated with less legacy devices, or an adjacent AP with a low ratio of the number of legacy devices to the number of HEW STAs) based on a load of an adjacent AP, and instruct the legacy device to switch to a channel on which the adjacent AP operates.

In step 1403, the HEW STA parses the channel switch announcement information element and the second ignoring instruction information element of the second message after receiving the second message transmitted by the AP, and ignores the channel switch announcement information element based on an instruction of the second ignoring instruction information element.

Here, it is assumed that the HEW STA complies with the protocol version of the second ignoring instruction information element, or the second ignoring instruction information element does not include the protocol version number.

In step 1404, the legacy device parses the channel switch announcement information element of the second message after receiving the second message broadcasted by the AP, and switches to the new channel based on an instruction of the channel switch announcement information element.

Step 1403 may be performed before or after step 1404.

In the embodiment, the AP transmits the second message including the channel switch announcement information element and the second ignoring instruction information element to all STAs of a BSS in a case that the state of the WLAN network meets the preset condition. The channel switch announcement information element is in a format supported by the legacy device and the HEW station, while the second ignoring instruction information element is in a format supported by the HEW state but not supported by the legacy device. In this case, the legacy device switches to the new channel in a specified time period based on an instruction of the channel switch announcement information element, while the HEW station continues communicating with the AP, thereby controlling access of the legacy device and improving a throughput and a communication efficiency of the WLAN network system.

It should be understood by those skilled in the art that, all or part of the steps in the above embodiments of method may be implemented with related hardware by following instructions of a program which may be stored in a computer-readable storage medium. When being executed, the program performs at least the steps of the above embodiments of method. The storage medium includes mediums capable of storing program codes, such as ROM, RAM, magnetic diskette or optical disk.

Finally, it should be noted that, the above embodiments are only used describe the technical schemes of the present disclosure, and not intended to limit the present disclosure. Although the disclosure is illustrated with reference to the embodiments thereof, those skilled in the art should appreciate that many modifications are possible for solutions of the exemplary embodiments, or substitutions may be made to part or all of the technical features in the embodiments; those modifications and substitutions would not render the essential of the solutions deviate from the scope of the disclosure.

## Claims

1. An access point, AP, comprising:
a processor (101) configured to determine whether a preset condition is met; and
a transmitter (102) configured to broadcast a first message once the preset condition is met, wherein the first message carries a quiet information element and a first ignoring instruction information element, the quiet information element is used to suspend a station, STA, which receives the first message, from transmitting information to the AP, the first ignoring instruction information element is in a format supported only by a specified STA, and the first ignoring instruction information element is used for instructing the specified STA to ignore the quiet information element, wherein the first message is a beacon frame periodically broadcasted by the AP, wherein, the specified STA is a high-efficiency wireless local area network station, HEW STA, and/or an STA with protocol versions later than HEW protocol defined in 802.11 standards.

2. The AP according to claim 1, wherein the processor (101) is further configured to:
detect a throughput of a WLAN network in which the AP is located; and
determine that the preset condition is met in a case that the throughput is less than a first threshold value.

3. The AP according to claim 1, wherein the processor (101) is further configured to:
detect a quantity of legacy devices associated with the WLAN network in which the AP is located and a quantity of HEW STAs, associated with the WLAN network in which the AP is located; and
determine that the preset condition is met in a case that the quantity of the legacy devices is greater than a second threshold value or a ratio of the quantity of the legacy devices to the quantity of the HEW STAs is greater than a third threshold value.

4. The AP according to any one of claims 1 to 3, wherein the quiet information element is a quiet information element quiet IE defined in 802.11 standards; and the processor (101) is further configured to determine a quiet duration in the quiet information element based on the throughput of the WLAN network in which the AP is located, the quantity of the associated legacy devices, or the ratio of the quantity of the associated legacy devices to the quantity of the associated HEW STAs.

5. A method for station access management in wireless local area network, WLAN, comprising:
Determining (601), by an access point, AP, whether a preset condition is met; and
Broadcasting (602) a first message by the AP once the preset condition is met, wherein the first message carries a quiet information element and a first ignoring instruction information element, the quiet information element is used to suspend a station, STA, which receives the first message, from transmitting information to the AP, the first ignoring instruction information element is in a format supported only by a specified STA, and the first ignoring instruction information element is used for instructing the specified STA to ignore the quiet information element, wherein the first message is a beacon frame periodically broadcasted by the AP, wherein, the specified STA is a high-efficiency wireless local area network station, HEW STA, and/or an STA with protocol versions later than HEW protocol defined in 802.11 standards.

6. The method according to claim 5, wherein the determining (601), by the AP, whether the preset condition is met comprises:
detecting, by the AP, a throughput of the WLAN network in which the AP is located; and
determining that the preset condition is met in a case that the throughput is less than a first threshold value.

7. The method according to claim 5, wherein the determining, by the AP, whether the preset condition is met comprises:
detecting, by the AP, a quantity of legacy devices associated with the WLAN network in which the AP is located and a quantity of HEW STAs, associated with the WLAN network in which the AP is located; and
determining that the preset condition is met in a case that the quantity of the legacy devices is greater than a second threshold value or a ratio of the quantity of the legacy devices to the quantity of the HEW STAs is greater than a third threshold value.

8. The method according to any one of claims 5 to 7, wherein
the quiet information element is a quiet information element defined in 802.11 standards; and
the method further comprises determining, by the AP, a quiet duration in the quiet information element based on the throughput of the WLAN network in which the AP is located, the quantity of the associated legacy devices or the ratio of the quantity of the associated legacy devices to the quantity of the associated HEW STAs.

9. An access point, AP, comprising:
a processor (901) configured to determine whether a preset condition is met; and
a transmitter (902) configured to broadcast a second message once the preset condition is met, wherein the second message carries a channel switch announcement information element and a second ignoring instruction information element, the channel switch announcement information element is used to enable a station, STA, which receives the second message, to switch to a new channel, the second ignoring instruction information element is in a format supported only by a specified STA, and the second ignoring instruction information element is used for instructing the specified STA to ignore the channel switch announcement information element, wherein the second message is any one of: a beacon frame, a channel switch announcement frame and an extended channel switch announcement frame periodically broadcasted by the AP, wherein, the specified STA is a high-efficiency wireless local area network station, HEW STA, and/or an STA with protocol versions later than HEW protocol defined in 802.11 standards.

10. The AP according to claim 9, wherein the processor (901) is configured to:
detect a throughput of a WLAN network in which the AP is located; and
determine that the preset condition is met in a case that the throughput is less than a first threshold value.

11. The AP according to claim 9, wherein the processor (901) is configured to:
detect a quantity of legacy devices associated with the WLAN network in which the AP is located and a quantity of HEW STAs, associated with the WLAN network in which the AP is located; and
determine that the preset condition is met in a case that the quantity of the legacy devices is greater than a second threshold value or a ratio of the quantity of the legacy devices to the quantity of the HEW STAs is greater than a third threshold value.

12. The AP according to any one of claims 9 to 11, wherein
the channel switch announcement information element is a channel switch announcement information element or an extended channel switch announcement information defined in 802.11 standards.

13. The AP according to any one of claims 9 to 11, wherein the processor (901) is further configured to determine an AP corresponding to the new channel, wherein a current load of the AP corresponding to the new channel is less than a fourth threshold value, the quantity of legacy devices associated with the AP corresponding to the new channel is less than a fifth threshold value, or a ratio of the quantity of the legacy devices associated with the AP corresponding to the new channel to the quantity of HEW STAs associated with the AP corresponding to the new channel is less than a sixth threshold value.

14. A method for station access management in wireless local area network, WLAN, comprising:
Determining (1201), by an access point, AP, whether a preset condition is met; and
Broadcasting (1202) a second message by the AP once the preset condition is met, wherein the second message carries a channel switch announcement information element and a second ignoring instruction information element, the channel switch announcement information element is used to enable a station, STA, which receives the second message, to switch to a new channel, the second ignoring instruction information element is in a format supported only by a specified STA, and the second ignoring instruction information element is used for instructing the specified STA to ignore the channel switch announcement information element, wherein the second message is any one of: a beacon frame, a channel switch announcement frame and an extended channel switch announcement frame periodically broadcasted by the AP, wherein, the specified STA is a high-efficiency wireless local area network station, HEW STA, and/or an STA with protocol versions later than HEW protocol defined in 802.11 standards.

15. The method according to claim 14, wherein the determining, by an access point AP, whether a preset condition is met comprises:
detecting, by the AP, a throughput of a WLAN network in which the AP is located; and
determining, by the AP, that the preset condition is met in a case that the throughput is less than a first threshold value.

16. The method according to claim 14, wherein the determining, by the access point AP, whether a preset condition is met comprises:
detecting, by the AP, a quantity of legacy devices associated with a WLAN network in which the AP is located and a quantity of HEW STAs, associated with the WLAN network in which the AP is located; and
determining, by the AP, that the preset condition is met in a case that the quantity of the legacy devices is greater than a second threshold value or a ratio of the quantity of the legacy devices to the quantity of the HEW STAs is greater than a third threshold value.

17. The method according to any one of claims 14 to 16, wherein
the channel switch announcement information element is a channel switch announcement information element or an extended channel switch announcement information element defined in 802.11 standards.

18. The method according to any one of claims 14 to 16, further comprising:
determining, by the AP, an AP corresponding to the new channel, wherein a current load of the AP corresponding to the new channel is less than a fourth threshold value, the quantity of legacy devices associated with the AP corresponding to the new channel is less than a fifth threshold value, or a ratio of the quantity of the legacy devices associated with the AP corresponding to the new channel to the quantity of HEW STAs associated with the AP corresponding to the new channel is less than a sixth threshold value.

## Patentansprüche

1. Zugangspunkt (Access Point, AP), umfassend:
einen Prozessor (101), der konfiguriert ist, um zu bestimmen, ob eine vorbestimmte Bedingung erfüllt ist; und
einen Sender (102), der konfiguriert ist, um eine erste Nachricht zu senden, sobald die voreingestellte Bedingung erfüllt ist, wobei die erste Nachricht ein stilles Informationselement und ein erstes ignorierendes Anweisungsinformationselement trägt, das stille Informationselement verwendet wird, um eine Station (STA), welche die erste Nachricht empfängt, davon abzuhalten, eine Information an den AP zu übertragen, das erste ignorierende Anweisungsinformationselement ein Format aufweist, das nur von einer festgelegten STA unterstützt wird, und das erste ignorierende Anweisungsinformationselement verwendet wird, um die festgelegte STA anzuweisen, das stille Informationselement zu ignorieren, wobei die erste Nachricht ein Beacon-Rahmen ist, der regelmäßig durch den AP gesendet wird, wobei die festgelegte STA eine Station in einem hocheffizienten drahtlosen lokalen Netzwerk (High-Efficiency Wireless Local Area Network Station, HEW-STA) ist und/oder eine STA mit einer höheren Protokollversion als das in den 802.11-Standards definierte HEW-Protokoll ist.

2. AP nach Anspruch 1, wobei der Prozessor (101) ferner konfiguriert ist, um:
einen Durchsatz eines WLAN-Netzwerks zu erkennen, in dem sich der AP befindet; und
zu bestimmen, dass die voreingestellte Bedingung in einem Fall erfüllt ist, in dem der Durchsatz kleiner als ein erster Schwellenwert ist.

3. AP nach Anspruch 1, wobei der Prozessor (101) ferner konfiguriert ist, um:
eine Menge von bereits vorhandenen Vorrichtungen, die dem WLAN-Netzwerk zugeordnet sind, in dem sich der AP befindet, und eine Menge von HEW-STAs, die dem WLAN-Netzwerk zugeordnet sind, in dem sich der AP befindet, zu erkennen; und zu bestimmen, dass die voreingestellte Bedingung in einem Fall erfüllt ist, in dem die Menge der bereits vorhandenen Vorrichtungen größer als ein zweiter Schwellenwert ist oder ein Verhältnis der Menge von bereits vorhandenen Vorrichtungen zu der Menge von HEW-STAs größer als ein dritter Schwellenwert ist.

4. AP nach einem der Ansprüche 1 bis 3, wobei das stille Informationselement ein stilles Informationselement (Quiet Information Element, quiet IE) ist, wie in den 802.11-Standards definiert; und der Prozessor (101) ferner konfiguriert ist, um eine stille Dauer in dem stillen Informationselement basierend auf dem Durchsatz des WLAN-Netzwerks, in dem sich der AP befindet, der Menge der zugeordneten bereits vorhandenen Vorrichtungen oder dem Verhältnis der Menge von bereits vorhandenen Vorrichtungen zu der Menge von zugeordneten HEW-STAs zu bestimmen.

5. Verfahren zur Stationszugangsverwaltung in einem drahtlosen lokalen Netzwerk (Wireless Local Area Network, WLAN), umfassend:
Bestimmen (601), durch einen Zugangspunkt (Access Point, AP), ob eine voreingestellte Bedingung erfüllt ist; und
Senden (602) einer ersten Nachricht durch den AP, sobald die voreingestellte Bedingung erfüllt ist, wobei die erste Nachricht ein stilles Informationselement und ein erstes ignorierendes Anweisungsinformationselement trägt, das stille Informationselement verwendet wird, um eine Station (STA), welche die erste Nachricht empfängt, davon abzuhalten, eine Information an den AP zu übertragen, das erste ignorierende Anweisungsinformationselement ein Format aufweist, das nur von einer festgelegten STA unterstützt wird, und das erste ignorierende Anweisungsinformationselement verwendet wird, um die festgelegte STA anzuweisen, das stille Informationselement zu ignorieren, wobei die erste Nachricht ein Beacon-Rahmen ist, der regelmäßig durch den AP gesendet wird, wobei die festgelegte STA eine Station in einem hocheffizienten drahtlosen lokalen Netzwerk (High-Efficiency Wireless Local Area Network Station, HEW-STA) ist und/oder eine STA mit einer höheren Protokollversion ist als das in den 802.11-Standards definierte HEW-Protokoll.

6. Verfahren nach Anspruch 5, wobei das Bestimmen (601), durch den AP, ob die voreingestellte Bedingung erfüllt ist, umfasst:
Erkennen, durch den AP, eines Durchsatzes des WLAN-Netzwerks, in dem sich der AP befindet; und
Bestimmen, dass die voreingestellte Bedingung in einem Fall erfüllt ist, in dem der Durchsatz kleiner als ein erster Schwellenwert ist.

7. Verfahren nach Anspruch 5, wobei das Bestimmen, durch den AP, ob die voreingestellte Bedingung erfüllt ist, umfasst:
Erkennen, durch den AP, einer Menge von bereits vorhandenen Vorrichtungen, die dem WLAN-Netzwerk zugeordnet sind, in dem sich der AP befindet, und einer Menge von HEW-STAs, die dem WLAN-Netzwerk zugeordnet sind, in dem sich der AP befindet; und
Bestimmen, dass die voreingestellte Bedingung in einem Fall erfüllt ist, in dem die Menge der bereits vorhandenen Vorrichtungen größer als ein zweiter Schwellenwert ist oder ein Verhältnis der Menge von bereits vorhandenen Vorrichtungen zu der Menge von HEW-STAs größer als ein dritter Schwellenwert ist.

8. Verfahren nach einem der Ansprüche 5 bis 7, wobei
das stille Informationselement ein stilles Informationselement ist, das in den 802.11-Standards definiert ist; und
das Verfahren ferner das Bestimmen, durch den AP, einer stillen Dauer in dem stillen Informationselement basierend auf dem Durchsatz des WLAN-Netzwerks, in dem sich der AP befindet, der Menge der zugeordneten bereits vorhandenen Vorrichtungen oder dem Verhältnis der Menge von bereits vorhandenen Vorrichtungen zu der Menge von zugeordneten HEW-STAs umfasst.

9. Zugangspunkt (Access Point, AP), umfassend:
einen Prozessor (901), der konfiguriert ist, um zu bestimmen, ob eine vorbestimmte Bedingung erfüllt ist; und
einen Sender (902), der konfiguriert ist, um eine zweite Nachricht zu senden, sobald die voreingestellte Bedingung erfüllt ist, wobei die zweite Nachricht ein Kanalwechsel-Ankündigungsinformationselement und ein zweites ignorierendes Anweisungsinformationselement trägt, das Kanalwechsel-Ankündigungsinformationselement verwendet wird, um einer Station (STA), welche die zweite Nachricht empfängt, zu ermöglichen, zu einem neuen Kanal zu wechseln, das zweite ignorierende Anweisungsinformationselement ein Format aufweist, das nur von einer festgelegten STA unterstützt wird, und das zweite ignorierende Anweisungsinformationselement verwendet wird, um die festgelegte STA anzuweisen, das Kanalwechsel-Ankündigungsinformationselement zu ignorieren, wobei die zweite Nachricht eines der Folgenden ist: ein Beacon-Rahmen, ein Kanalwechselankündigungsrahmen und ein erweiterter Kanalwechselankündigungsrahmen, der regelmäßig von dem AP gesendet wird, wobei die festgelegte STA eine Station in einem hocheffizienten drahtlosen lokalen Netzwerk (High-Efficiency Wireless Local Area Network Station, HEW-STA) ist und/oder eine STA mit einer höheren Protokollversion als das in den 802.11-Standards definierte HEW-Protokoll ist.

10. AP nach Anspruch 9, wobei der Prozessor (901) konfiguriert ist, um:
einen Durchsatz eines WLAN-Netzwerks zu erkennen, in dem sich der AP befindet; und
zu bestimmen, dass die voreingestellte Bedingung in einem Fall erfüllt ist, in dem der Durchsatz kleiner als ein erster Schwellenwert ist.

11. AP nach Anspruch 9, wobei der Prozessor (901) konfiguriert ist, um:
eine Menge von bereits vorhandenen Vorrichtungen, die dem WLAN-Netzwerk zugeordnet sind, in dem sich der AP befindet, und eine Menge von HEW-STAs, die dem WLAN-Netzwerk zugeordnet sind, in dem sich der AP befindet, zu erkennen; und zu bestimmen, dass die voreingestellte Bedingung in einem Fall erfüllt ist, in dem die Menge der bereits vorhandenen Vorrichtungen größer als ein zweiter Schwellenwert ist oder ein Verhältnis der Menge von bereits vorhandenen Vorrichtungen zu der Menge von HEW-STAs größer als ein dritter Schwellenwert ist.

12. AP nach einem der Ansprüche 9 bis 11, wobei
das Kanalwechsel-Ankündigungsinformationselement ein Kanalwechsel-Ankündigungsinformationselement oder eine erweiterte Kanalwechsel-Ankündigungsinformation ist, die in den 802.11-Standards definiert sind.

13. AP nach einem der Ansprüche 9 bis 11, wobei der Prozessor (901) ferner konfiguriert ist, um einen dem neuen Kanal entsprechenden AP zu bestimmen, wobei eine aktuelle Last des dem neuen Kanal entsprechenden AP kleiner als ein vierter Schwellenwert ist, die Menge von bereits vorhandenen Vorrichtungen, die dem AP zugeordnet sind, der dem neuen Kanal entspricht, kleiner als ein fünfter Schwellenwert ist, oder ein Verhältnis der Menge von bereits vorhandenen Vorrichtungen, die dem AP zugeordnet sind, der dem neuen Kanal entspricht, zu der Menge von HEW-STAs, die dem AP zugeordnet sind, der dem neuen Kanal entspricht, kleiner als ein sechster Schwellenwert ist.

14. Verfahren zur Stationszugangsverwaltung in einem drahtlosen lokalen Netzwerk (Wireless Local Area Network, WLAN), umfassend:
Bestimmen (1201), durch einen Zugangspunkt (Access Point, AP), ob eine voreingestellte Bedingung erfüllt ist; und
Senden (1202) einer zweiten Nachricht durch den AP, sobald die voreingestellte Bedingung erfüllt ist, wobei die zweite Nachricht ein Kanalwechsel-Ankündigungsinformationselement und ein zweites ignorierendes Anweisungsinformationselement trägt, das Kanalwechsel-Ankündigungsinformationselement verwendet wird, um einer Station (STA), welche die zweite Nachricht empfängt, zu ermöglichen, zu einem neuen Kanal zu wechseln, das zweite ignorierende Anweisungsinformationselement ein Format aufweist, das nur von einer festgelegten STA unterstützt wird, und das zweite ignorierende Anweisungsinformationselement verwendet wird, um die festgelegte STA anzuweisen, das Kanalwechsel-Ankündigungsinformationselement zu ignorieren, wobei die zweite Nachricht eines der Folgenden ist: ein Beacon-Rahmen, ein Kanalwechselankündigungsrahmen und ein erweiterter Kanalwechselankündigungsrahmen, der regelmäßig von dem AP gesendet wird, wobei die festgelegte STA eine Station in einem hocheffizienten drahtlosen lokalen Netzwerk (High-Efficiency Wireless Local Area Network Station, HEW-STA) ist und/oder eine STA mit einer höheren Protokollversion als das in den 802.11-Standards definierte HEW-Protokoll ist.

15. Verfahren nach Anspruch 14, wobei das Bestimmen, durch einen Zugangspunkt (Access Point, AP), ob eine voreingestellte Bedingung erfüllt ist, umfasst:
Erkennen, durch den AP, eines Durchsatzes eines WLAN-Netzwerks, in dem sich der AP befindet; und
Bestimmen, durch den AP, dass die voreingestellte Bedingung in einem Fall erfüllt ist, in dem der Durchsatz kleiner als ein erster Schwellenwert ist.

16. Verfahren nach Anspruch 14, wobei das Bestimmen, durch den Zugangspunkt (Access Point, AP), ob eine voreingestellte Bedingung erfüllt ist, umfasst:
Erkennen, durch den AP, einer Menge von bereits vorhandenen Vorrichtungen, die einem WLAN-Netzwerk zugeordnet sind, in dem sich der AP befindet, und eine Menge von HEW-STAs, die dem WLAN-Netzwerk zugeordnet sind, in dem sich der AP befindet; und
Bestimmen, durch den AP, dass die voreingestellte Bedingung in einem Fall erfüllt ist, in dem die Menge der bereits vorhandenen Vorrichtungen größer als ein zweiter Schwellenwert ist oder ein Verhältnis der Menge von bereits vorhandenen Vorrichtungen zu der Menge von HEW-STAs größer als ein dritter Schwellenwert ist.

17. Verfahren nach einem der Ansprüche 14 bis 16, wobei
das Kanalwechsel-Ankündigungsinformationselement ein Kanalwechsel-Ankündigungsinformationselement oder ein erweitertes Kanalwechsel-Ankündigungsinformationselement ist, die in den 802.11-Standards definiert sind.

18. Verfahren nach einem der Ansprüche 14 bis 16, ferner umfassend:
Bestimmen, durch den AP, eines dem neuen Kanal entsprechenden AP, wobei eine aktuelle Last des dem neuen Kanal entsprechenden AP kleiner als ein vierter Schwellenwert ist, die Menge von bereits vorhandenen Vorrichtungen, die dem AP zugeordnet sind, der dem neuen Kanal entspricht, kleiner als ein fünfter Schwellenwert ist, oder ein Verhältnis der Menge von bereits vorhandenen Vorrichtungen, die dem AP zugeordnet sind, der dem neuen Kanal entspricht, zu der Menge von HEW-STAs, die dem AP zugeordnet sind, der dem neuen Kanal entspricht, kleiner als ein sechster Schwellenwert ist.

## Revendications

1. Point d'accès, AP, comprenant :
un processeur (101) configuré pour déterminer qu'une condition prédéfinie est satisfaite ou non ; et
un émetteur (102) configuré pour diffuser un premier message une fois que la condition prédéfinie est satisfaite, dans lequel le premier message inclut un élément d'information de mise sous silence et une première instruction de non-prise en compte d'élément d'information, l'élément d'information de mise sous silence servant à empêcher une station, STA, qui reçoit le premier message, de transmettre des informations à l'AP, la première instruction de non-prise en compte d'élément d'information étant dans un format pris en charge uniquement par une STA spécifiée, et la première instruction de non-prise en compte d'élément d'information servant à ordonner à la STA spécifiée d'ignorer l'élément d'information de mise sous silence, dans lequel le premier message est une trame balise diffusée périodiquement par l'AP, dans lequel, la STA spécifiée est une station de réseau local sans fil de haut rendement, HEW STA, et/ou une STA dotée de versions de protocole ultérieures au protocole HEW défini dans les normes 802.11.

2. AP selon la revendication 1, dans lequel le processeur (101) est configuré en outre pour :
détecter un débit d'un réseau WLAN dans lequel se trouve l'AP ; et
déterminer que la condition prédéfinie est satisfaite si le débit est inférieur à une première valeur limite.

3. AP selon la revendication 1, dans lequel le processeur (101) est configuré en outre pour :
détecter une quantité de dispositifs patrimoniaux associés au réseau WLAN dans lequel se trouve l'AP et une quantité de HEW STA, associées au réseau WLAN dans lequel se trouve l'AP ; et
déterminer que la condition prédéfinie est satisfaite quand la quantité des dispositifs patrimoniaux est supérieure à une deuxième valeur limite ou un rapport de la quantité des dispositifs patrimoniaux sur la quantité des HEW STA est supérieur à une troisième valeur limite.

4. AP selon l'une quelconque des revendications 1 à 3, dans lequel l'élément d'information de mise sous silence est un élément d'information de mise sous silence, quiet IE, défini dans les normes 802.11 ; et le processeur (101) est configuré en outre pour déterminer une durée de mise sous silence dans l'élément d'information de mise sous silence en fonction du débit du réseau WLAN dans lequel se trouve l'AP, de la quantité des dispositifs patrimoniaux associés, ou du rapport de la quantité des dispositifs patrimoniaux associés à la quantité des HEW STA associées.

5. Procédé de gestion d'accès de stations dans un réseau local sans fil, WLAN, comprenant :
la détermination (601), par un point d'accès, AP, qu'une condition prédéfinie est satisfaite ou non ; et
la diffusion (602) d'un premier message par l'AP une fois que la condition prédéfinie est satisfaite, dans lequel
le premier message inclut un élément d'information de mise sous silence et une première instruction de non-prise en compte d'élément d'information, l'élément d'information de mise sous silence servant à empêcher une station, STA, qui reçoit le premier message, de transmettre des informations à l'AP, la première instruction de non-prise en compte d'élément d'information étant dans un format pris en charge uniquement par une STA spécifiée, et la première instruction de non-prise en compte d'élément d'information servant à ordonner à la STA spécifiée d'ignorer l'élément d'information de mise sous silence, dans lequel le premier message est une trame balise diffusée périodiquement par l'AP, dans lequel, la STA spécifiée est une station de réseau local sans fil de haut rendement, HEW STA, et/ou une STA dotée de versions de protocole ultérieures au protocole HEW défini dans les normes 802.11.

6. Procédé selon la revendication 5, dans lequel la détermination (601), par l'AP, que la condition prédéfinie est satisfaite ou non comprend :
la détection, par l'AP, d'un débit du réseau WLAN dans lequel se trouve l'AP ;
et
la détermination que la condition prédéfinie est satisfaite lorsque le débit est inférieur à une première valeur limite.

7. Procédé selon la revendication 5, dans lequel la détermination, par l'AP, que la condition prédéfinie est satisfaite ou non comprend :
la détection, par l'AP, d'une quantité de dispositifs patrimoniaux associés au réseau WLAN dans lequel se trouve l'AP et d'une quantité de HEW STA, associées au réseau WLAN dans lequel se trouve l'AP ; et
la détermination que la condition prédéfinie est satisfaite lorsque la quantité des dispositifs patrimoniaux est supérieure à une deuxième valeur limite ou un rapport de la quantité des dispositifs patrimoniaux sur la quantité des HEW STA est supérieur à une troisième valeur limite.

8. Procédé selon l'une quelconque des revendications 5 à 7, dans lequel
l'élément d'information de mise sous silence est un élément d'information de mise sous silence défini dans les normes 802.11 ;
et
le procédé comprenant en outre la détermination, par l'AP, d'une durée de mise sous silence dans l'élément d'information de mise sous silence en fonction du débit du réseau WLAN dans lequel se trouve l'AP, de la quantité des dispositifs patrimoniaux associés, ou du rapport de la quantité des dispositifs patrimoniaux associés à la quantité des HEW STA associées.

9. Point d'accès, AP, comprenant :
un processeur (901) configuré pour déterminer qu'une condition prédéfinie est satisfaite ou non ; et
un émetteur (902) configuré pour diffuser un second message une fois que la condition prédéfinie est satisfaite, dans lequel le second message inclut un élément d'information d'annonce de commutation de canal et une seconde instruction de non-prise en compte d'élément d'information, l'élément d'information d'annonce de commutation de canal servant à permettre à une station, STA, qui reçoit le second message, de commuter sur un nouveau canal, la seconde instruction de non-prise en compte d'élément d'information étant dans un format pris en charge uniquement par la STA spécifiée, et la seconde instruction de non-prise en compte d'élément d'information servant à ordonner à la STA spécifiée d'ignorer l'élément d'information d'annonce de commutation de canal, dans lequel le second message est n'importe lequel d'une : trame balise, trame d'annonce de commutation de canal et trame d'annonce de commutation de canal étendue diffusée périodiquement par l'AP, dans lequel la STA spécifiée est une station de réseau local sans fil de haut rendement, HEW STA, et/ou une STA dotée de versions de protocole ultérieures au protocole HEW défini dans les normes 802.11.

10. AP selon la revendication 9, dans lequel le processeur (901) est configuré pour :
détecter un débit d'un réseau WLAN dans lequel se trouve l'AP ; et
déterminer que la condition prédéfinie est satisfaite lorsque le débit est inférieur à une première valeur limite.

11. AP selon la revendication 9, dans lequel le processeur (901) est configuré pour :
détecter une quantité de dispositifs patrimoniaux associés au réseau WLAN dans lequel se trouve l'AP et une quantité de HEW STA, associées au réseau WLAN dans lequel se trouve l'AP ; et
déterminer que la condition prédéfinie est satisfaite lorsque la quantité des dispositifs patrimoniaux est supérieure à une deuxième valeur limite ou un rapport de la quantité des dispositifs patrimoniaux sur la quantité des HEW STA est supérieur à une troisième valeur limite.

12. AP selon l'une quelconque des revendications 9 à 11, dans lequel
l'élément d'information d'annonce de commutation de canal est un élément d'information d'annonce de commutation de canal ou une information d'annonce de commutation de canal étendue défini dans les normes 802.11.

13. AP selon l'une quelconque des revendications 9 à 11, dans lequel le processeur (901) est configuré en outre pour déterminer un AP correspondant au nouveau canal, dans lequel une charge actuelle de l'AP correspondant au nouveau canal est inférieure à une quatrième valeur limite, la quantité de dispositifs patrimoniaux associés à l'AP correspondant au nouveau canal est inférieure à une cinquième valeur limite, ou un rapport de la quantité des dispositifs patrimoniaux associés à l'AP correspondant au nouveau canal sur la quantité de HEW STA associées à l'AP correspondant au nouveau canal est inférieure à une sixième valeur limite.

14. Procédé de gestion d'accès de stations dans un réseau local sans fil, WLAN, comprenant :
la détermination (1201), par un point d'accès, AP, qu'une condition prédéfinie est satisfaite ou non ; et
la diffusion (1202) d'un second message par l'AP une fois que la condition prédéfinie est satisfaite, dans lequel le second message inclut un élément d'information d'annonce de commutation de canal et une seconde instruction de non-prise en compte d'élément d'information, l'élément d'information d'annonce de commutation de canal servant à permettre à une station, STA, qui reçoit le second message, de commuter sur un nouveau canal, la seconde instruction de non-prise en compte d'élément d'information étant dans un format pris en charge uniquement par la STA spécifiée, et la seconde instruction de non-prise en compte d'élément d'information servant à ordonner à la STA spécifiée d'ignorer l'élément d'information d'annonce de commutation de canal, dans lequel le second message est n'importe lequel d'une : trame balise, trame d'annonce de commutation de canal et trame d'annonce de commutation de canal étendue diffusée périodiquement par l'AP, dans lequel la STA spécifiée est une station de réseau local sans fil de haut rendement, HEW STA, et/ou une STA dotée de versions de protocole ultérieures au protocole HEW défini dans les normes 802.11.

15. Procédé selon la revendication 14, dans lequel la détermination, par un point d'accès AP, qu'une condition prédéfinie est satisfaite ou non comprend :
la détection, par l'AP, d'un débit d'un réseau WLAN dans lequel se trouve l'AP ; et
la détermination, par l'AP, que la condition prédéfinie est satisfaite lorsque le débit est inférieur à une première valeur limite.

16. Procédé selon la revendication 14, dans lequel la détermination, par le point d'accès AP, qu'une condition prédéfinie est satisfaite ou non comprend :
la détection, par l'AP, d'une quantité de dispositifs patrimoniaux associés à un réseau WLAN dans lequel se trouve l'AP et d'une quantité de HEW STA, associées au réseau WLAN dans lequel se trouve l'AP ; et
la détermination, par l'AP, que la condition prédéfinie est satisfaite lorsque la quantité de dispositifs patrimoniaux est supérieure à une deuxième valeur limite ou un rapport de la quantité des dispositifs patrimoniaux sur la quantité des HEW STA est supérieur à une troisième valeur limite.

17. Procédé selon l'une quelconque des revendications 14 à 16, dans lequel
l'élément d'information d'annonce de commutation de canal est un élément d'information d'annonce de commutation de canal ou un élément d'information d'annonce de commutation de canal étendu défini dans les normes 802.11.

18. Procédé selon l'une quelconque des revendications 14 à 16, comprenant en outre :
la détermination, par l'AP, d'un AP correspondant au nouveau canal, dans lequel une charge actuelle de l'AP correspondant au nouveau canal est inférieure à une quatrième valeur limite, la quantité de dispositifs patrimoniaux associés à l'AP correspondant au nouveau canal est inférieure à une cinquième valeur limite, ou un rapport de la quantité des dispositifs patrimoniaux associés à l'AP correspondant au nouveau canal sur la quantité de HEW STA associées à l'AP correspondant au nouveau canal est inférieure à une sixième valeur limite.
